(19) Europäisches Patentamt
European Patent Office
Office européen des brevets

(11) **EP 4 530 934 A1**

(12) **EUROPEAN PATENT APPLICATION**

(43) Date of publication:
**02.04.2025 Bulletin 2025/14**

(21) Application number: **24198399.8**

(22) Date of filing: **04.09.2024**

(51) International Patent Classification (IPC):
**G06N 5/01** *(2023.01)*

(52) Cooperative Patent Classification (CPC):
**G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 JP 2023164045**

(71) Applicants:
• **FUJITSU LIMITED**
**Kawasaki-shi, Kanagawa 211-8588 (JP)**

• **OSAKA UNIVERSITY**
**Suita-shi**
**Osaka 565-0871 (JP)**

(72) Inventors:
• **KIMURA, Keiji**
**Kawasaki-shi, Kanagawa, 211-8588 (JP)**
• **UMETANI, Shunji**
**Suita-shi, Osaka, 565-0871 (JP)**

(74) Representative: **Hoffmann Eitle**
**Patent- und Rechtsanwälte PartmbB**
**Arabellastraße 30**
**81925 München (DE)**

(54) **RECORDING MEDIUM, INFORMATION PROCESSING METHOD, AND INFORMATION PROCESSING DEVICE**

(57) A program for causing a computer to execute a process including: obtaining constraint conditions forming a 0-1 integer programming problem including variables each taking a value 0 or 1, each constraint condition including at least one of the variables; identifying pairings of a variable appearing only in a predetermined number of constraint conditions and the constraint conditions where the variable appears, the predetermined number being less than a total number of the constraint conditions; registering, in a storage unit, for each of the identified pairings, first correlation information correlating the variable of the pairing with another variable appearing in at least one of the constraint conditions of the pairing; registering, in the storage unit, second correlation information correlating, based on a degree of relationship between the variables, at least one of the variables and another variable having at least a predetermined degree of relationship with the at least one variable; and searching for a solution to the 0-1 integer programming problem by determining, based on the first and second correlation information, a group of any two or more correlated variables, for value inversion.

FIG.1

**Description**

FIELD OF THE INVENTION

The embodiments discussed herein relate to a recording medium, an information processing method, and an information processing device.

BACKGROUND OF THE INVENTION

Conventionally, a weighted local search method is used as meta-heuristics for solving 0-1 integer programming problems involving variables each of which takes the value 0 or 1. For example, in a weighted local search method, a 0-1 integer programming problem may be solved while narrowing down the space in which a solution to the 0-1 integer programming problem is searched for, based on the degree of relationship between the variables.

As a prior art, for example, there is a method for solving a 0-1 integer programming problem while narrowing down the space in which a solution to the 0-1 integer programming problem is searched for, based on the degree of relationship between the variables. For example, refer to Umetani, Shunji, "Exploiting variable associations to configure efficient local search algorithms in large-scale binary integer programs," European Journal of Operational Research 263.1 (2017): 72-81

SUMMARY OF THE INVENTION

It is an object in one aspect of the embodiments to at least solve the above problems in the conventional technologies.

According to an aspect of an embodiment, an information processing program causes a computer to execute a process including: obtaining a plurality of constraint conditions that form a 0-1 integer programming problem including a plurality of variables each taking a value 0 or 1, the plurality of constraint conditions each including at least one of the plurality of variables; identifying pairings of a variable that appears only in a predetermined number of constraint conditions among the plurality of constraint conditions, and the predetermined number of constraint conditions in which the variable appears, the predetermined number being less than a total number of constraint conditions of the plurality of constraint conditions; registering, in a storage unit, for each of the identified pairings, first correlation information correlating the variable of the pairing with another variable that appears in at least one of the predetermined number of constraint conditions of the pairing; registering, in the storage unit, second correlation information correlating, based on a degree of relationship between variables of the plurality of variables, at least one of the plurality of variables with another variable that has a predetermined or greater degree of relationship with the at least one variable; and searching for a solution to the 0-1 integer programming problem by referring to the storage unit and determining, based on the first correlation information and the second correlation information, a group of any two or more correlated variables among the plurality of variables as an object for value inversion.

BRIEF DESCRIPTION OF DRAWINGS

Fig. 1 is an explanatory view depicting one example of an information processing method according to an embodiment.
Fig. 2 is an explanatory view depicting an example of an information processing system 200.
Fig. 3 is a block diagram depicting an example of a hardware configuration of an information processing device 100.
Fig. 4 is a block diagram depicting an example of a functional configuration of the information processing device 100.
Fig. 5 is an explanatory view depicting an example of operation of the information processing device 100.
Fig. 6 is an explanatory view depicting a specific example of the operation of the information processing device 100.
Fig. 7 is an explanatory view depicting an example of application of the information processing device 100.
Fig. 8 is a flowchart depicting an example of an overall processing procedure.
Fig. 9 is a flowchart depicting an example of an initialization processing procedure.
Fig. 10 is a flowchart depicting an example of a 1-flip neighborhood search processing procedure.
Fig. 11 is a flowchart depicting an example of a 2-flip neighborhood search processing procedure.
Fig. 12 is a flowchart depicting an example of a (3,4)-flip neighborhood search processing procedure.
Fig. 13 is a flowchart depicting an example of an update processing procedure.

DESCRIPTION OF THE INVENTION

First, problems associated with the conventional techniques are discussed. For example, sometimes it may be difficult to solve a 0-1 integer programming problem with the prior art described in Umetani Shunji, "Exploiting variable associations to configure efficient local search algorithms in large-scale binary integer programs." For example, in cases where the 0-1 integer programming problem includes a variable that appears in only one constraint condition, it may not be possible to appropriately narrow down the space searched for a solution to the 0-1 integer programming problem based on the degree of relationship between variables, and as a result, it may become impossible to solve the 0-1 integer programming problem.

Preferred embodiments of a recording medium, an information processing method, and an information processing device according to the present invention are described with reference to the accompanying drawings.

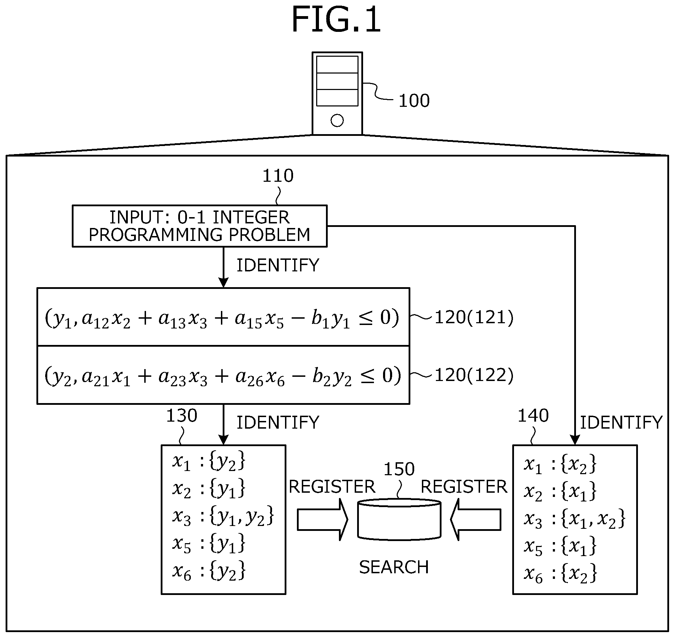

Fig. 1 is an explanatory view depicting one example of an information processing method according to an embodiment. An information processing device 100 is a computer for calculating a solution to a 0-1 integer programming problem. The information processing device 100 is, for example, a server or a personal computer (PC).

The 0-1 integer programming problem includes variables, each of which takes a value 0 or 1. A solution to the 0-1 integer programming problem is a combination of the values of the variables. The 0-1 integer programming problem includes, as an object to be optimized, for example, an objective function that uses variables. The optimization is, for example, minimization or maximization. For example, the objective function is defined by Formula (1) below, where N is an index set of variables, $x_j$ is a j-th variable, and $c_j$ is a coefficient applied to the j-th variable.

$$\min_{x} \sum_{j \in N} c_j x_j \ \dots (1)$$

The 0-1 integer programming problem includes, for example, constraint conditions. The constraint conditions include, for example, at least one of the variables. For example, the constraint conditions are defined by Formulae (2) to (4) below, where $M_L$ is an index set of inequality constraints that serve as constraint conditions, $M_E$ is an index set of equality constraints that serve as constraint conditions, $a_{ij}$ is a coefficient applied to the j-th variable, and $b_i$ is a constant.

$$\sum_{j \in N} a_{ij} x_j \leq b_i (i \in M_L) \quad \dots (2)$$

$$\sum_{j \in N} a_{ij} x_j = b_i (i \in M_E) \dots (3)$$

$$x_j \in \{0,1\}(j \in N) \dots (4)$$

Conventional meta-heuristics for solving the 0-1 integer programming problem include a weighted local search method. For more details on the weighted local search method, see, e.g., Umetani Shunji, "Exploiting variable associations to configure efficient local search algorithms in large-scale binary integer programs." European Journal of Operational Research 263.1 (2017): 72-81. For example, the weighted local search method sometimes solves the 0-1 integer programming problem by narrowing down the space searched for the solution to the 0-1 integer programming problem based on the degree of relationship between variables. For example, the larger the number of constraint conditions that include both of two variables among the constraint conditions, the larger is the value of the degree of relationship between the two variables.

For example, in the weighted local search method, each of multiple constraint conditions is applied to an objective function by adding to the objective function, a term related to a violation amount of each of the constraint conditions. The term is, for example, a product obtained by multiplying the violation amount of a constraint condition by a coefficient. For example, the weighted local search method searches for a solution to the 0-1 integer programming problem by repeatedly executing a series of processes based on the objective function until an ending condition is satisfied.

The series of processes includes, for example, a 1-flip neighborhood search process that evaluates whether a solution candidate obtained by inverting the value of any variable from a provisional solution brings the value of the objective function closer to an appropriate direction than the provisional solution. In the 1-flip neighborhood search process, for example, if a solution candidate obtained by inverting the value of any variable from the provisional solution brings the value of the objective function closer to an appropriate direction than the provisional solution, the provisional solution is updated with the solution candidate.

The series of processes includes, for example, a 2-flip neighborhood search process that is executed when the provisional solution is not updated in the 1-flip neighborhood search process. For example, the 2-flip neighborhood search process evaluates whether a solution candidate obtained by inverting the values of any two variables having a large degree of relationship from the provisional solution brings the value of the objective function closer to an appropriate direction than the provisional solution, based on the degree of relationship between the variables. In the 2-flip neighborhood search process, for example, if a solution candidate obtained by inverting the values of any two variables having a large degree of relationship from the provisional solution brings the value of the objective function closer to an appropriate direction than the provisional solution, the provisional solution is updated with the solution candidate.

The series of processes includes, for example, a (3,4)-flip neighborhood search process that is executed when the provisional solution is not updated in the 2-flip neighborhood search process. For example, the (3,4)-flip neighborhood search process evaluates whether a solution candidate obtained by inverting the values of any three or four variables having a large degree of relationship from the provisional solution brings the value of the objective function closer to an appropriate direction than the provisional solution, based on the degree of relationship between the variables. In the (3,4)-flip neighborhood search process, for example, if a solution candidate obtained by inverting the values of any three or four variables having a large degree of relationship from the provisional solution brings the value of the objective function closer to an appropriate direction than the provisional solution, the provisional solution is updated with the solution candidate.

For example, in the weighted local search method, if the provisional solution is not updated with the current execution of the series of processes, a coefficient by which the violation amount of at least one of the constraint conditions is multiplied may be updated before the next execution of the series of processes.

For example, in the weighted local search method, if the provisional solution has been updated at least once after the coefficient by which the violation amount of at least one of the constraint conditions is multiplied was most recently updated, the coefficient by which the violation amount of at least one of the constraint conditions is multiplied may be updated to a value larger than the current value. For example, in the weighted local search method, if the provisional solution has not been updated after the coefficient by which the violation amount of at least one of the constraint conditions is multiplied was most recently updated, the coefficient by which the violation amount of at least one of the constraint conditions is multiplied may be updated to a value smaller than the current value.

However, in the conventional method, it may be difficult to calculate a solution to the 0-1 integer programming problem. For example, when there is a variable that appears in only one constraint condition, the degree of relationship between the variable and other variables is relatively small. For this reason, in the 2-flip neighborhood search process and the (3, 4)-flip neighborhood search process, a group of a variable appearing in only one constraint condition and other variables is not selected as a value inversion object. As a result, it may not be possible to appropriately narrow down the space searched for a solution to the 0-1 integer programming problem.

As a result, in the conventional technology, for example, it may not be possible to appropriately search for a solution to the 0-1 integer programming problem, and it may not be possible to accurately calculate a solution to the 0-1 integer programming problem.

On the other hand, a method of modifying the weighted local search method may be considered so that a series of processes is repeatedly executed to calculate and evaluate solution candidates with inverted values for all possible groups, each of which includes two or more variables, regardless of the degree of relationship. This method has a problem in that the processing load and processing time required to perform the series of processes are increased, making it difficult to efficiently calculate a solution to the 0-1 integer programming problem.

Thus, in the present embodiment, an information processing method that may facilitate solving the 0-1 integer programming problem is described. According to the present embodiment, for example, it is possible to accurately calculate an appropriate solution to the 0-1 integer programming problem while reducing the processing load and processing time required for a provisional solution to find an appropriate solution to the 0-1 integer programming problem.

In Fig. 1, (1-1) The information processing device 100 obtains a 0-1 integer programming problem 110. The 0-1 integer programming problem 110 includes multiple variables each taking a value 0 or 1. The 0-1 integer programming problem 110 is a 0-1 integer programming problem. For example, the information processing device 100 obtains an objective function forming the 0-1 integer programming problem 110. For example, the information processing device 100 obtains constraint conditions forming the 0-1 integer programming problem 110. The constraint conditions include at least one of the variables. The constraint conditions are mathematical expressions. In the example depicted in Fig. 1, the variables are, for example, $x_i$ and $y_j$. """ is a positive integer. "j" is a positive integer. For convenience of explanation, a variable appearing only in one constraint condition is denoted as $y_j$, and a variable appearing in common in two or more constraint conditions is denoted as $x_i$.

(1-2) The information processing device 100 identifies pairings 120 of: a variable that appears only in a predetermined number of constraint conditions that is less than the total number of constraint conditions, and the predetermined number of constraint conditions in which the variable appears. The predetermined number is, for example, one. In the example depicted in Fig. 1, the information processing device 100, for example, identifies a variable yi that appears in only one constraint condition and a variable $y_2$ that appears in only one constraint condition. The information processing device 100, for example, identifies a pairing 121 of the variable yi and the one constraint condition in which the identified variable yi appears. The information processing device 100 for example identifies a pairing 122 of the variable yi and the one constraint condition in which the identified variable $y_2$ appears.

(1-3) For each identified pairing 120, the information processing device 100 registers, in a storage unit 150, first correlation information that correlates a variable of the pairing 120 with another variable that appears in at least one of a predetermined number of constraint conditions of the pairing 120. In the example depicted in Fig. 1, for example, the information processing device 100 registers, in the storage unit 150, first correlation information that correlates the variable yi of the identified pairing 121 with other variables $x_2$, $x_3$, and $x_5$ that appear in the constraint condition of the pairing 121 as depicted in Table 130. For example, the information processing device 100 registers, in the storage unit 150, first correlation information that correlates the variable $y_2$ of the identified pairing 122 with other variables $x_1$, $x_3$, and $x_6$ that appear in the constraint condition of the pairing 122 as depicted in Table 130.

(1-4) The information processing device 100 registers, in the storage unit 150, second correlation information that correlates at least one of the variables with another variable that has a certain degree of relationship with the at least one of the variables, based on the degree of relationship between the variables. The degree of relationship is, for example, an index value proportional to the number of constraint conditions in which two variables appear in common. For example, the degree of relationship between two variables is an index value whose value increases as the number of constraint conditions in which the two variables appear in common increases. For example, the information processing device 100 registers, in the storage unit 150, second correlation information that correlates at least one of variables with another variable whose degree of relationship with the at least one of the variables is equal to or greater than a certain level and is the largest.

In the example depicted in Fig. 1, for example, as depicted in Table 140, the information processing device 100 registers, in the storage unit 150, second correlation information that correlates a variable $x_1$ with a variable $x_2$ whose degree of relationship with the variable $x_1$ is equal to or greater than a certain level and is the largest. For example, as depicted in Table 140, the information processing device 100 registers, in the storage unit 150, second correlation information that correlates a variable $x_2$ with a variable $x_1$ whose degree of relationship with the variable $x_2$ is equal to or greater than a certain level and is the largest. For example, the information processing device 100 registers, in the storage unit 150, second correlation information associating a variable $x_3$ with the variables $x_1$ and $x_2$ whose degree of relationship with the variable $x_3$ is equal to or greater than a certain level and is the largest, as depicted in Table 140. For example, the information processing device 100 registers, in the storage unit 150, second correlation information associating a variable $x_5$ with the variable $x_1$ whose degree of relationship with the variable $x_5$ is equal to or greater than a certain level and is the largest, as depicted in Table 140. For example, the information processing device 100 registers in the storage unit 150 second correlation information associating a variable xewith the variable $x_1$ whose degree of relationship with the variable $x_6$ is equal to or greater than a certain level and is the largest, as depicted in Table 140.

(1-5) The information processing device 100 calculates a solution to the 0-1 integer programming problem 110 by searching for a solution to the 0-1 integer programming problem 110 with reference to the storage unit 150. The information processing device 100 searches for a solution to the 0-1 integer programming problem 110 by determining, for example, a group of any two or more correlated variables among variables, as an object for inverting values, based on the first correlation information and the second correlation information. For example, the information processing device 100 performs a weighted local search method that is extended to determine, for example, a group of any two or more correlated variables as an object for inverting values, based on the first correlation information and the second correlation information.

This allows the information processing device 100 to facilitate solving the 0-1 integer programming problem 110. For example, the information processing device 100 may accurately calculate the solution to the 0-1 integer programming problem 110, may efficiently calculate the solution to the 0-1 integer programming problem 110, and may reduce the time required to calculate the solution to the 0-1 integer programming problem 110. For example, the information processing device 100 may determine a group including a variable that appears in only one constraint condition, which is not an object for inverting the value when only the degree of relationship is referred to, as a value inversion object, and may facilitate solving the 0-1 integer programming problem 110.

Although a case has been described in which the predetermined number is 1, this is not limitative. For example, the predetermined number may be a number of 2 or more that is less than the total number of constraint conditions. For example, the predetermined number may be a specified fraction of the total number of constraint conditions.

A case has been described in which the information processing device 100 executes an extended weighted local search method on the basis of an existing algorithm of the weighted local search method, but this is not limitative. For example, the information processing device 100 may search for a solution to the 0-1 integer programming problem 110 based on the first correlation information and the second correlation information using a new algorithm different from the existing algorithm of the weighted local search method.

A case has been described in which the functions of the information processing device 100 are implemented by a single computer, but this is not limitative. For example, the functions of the information processing device 100 may be implemented by cooperation of computers. For example, the functions of the information processing device 100 may be implemented on a cloud.

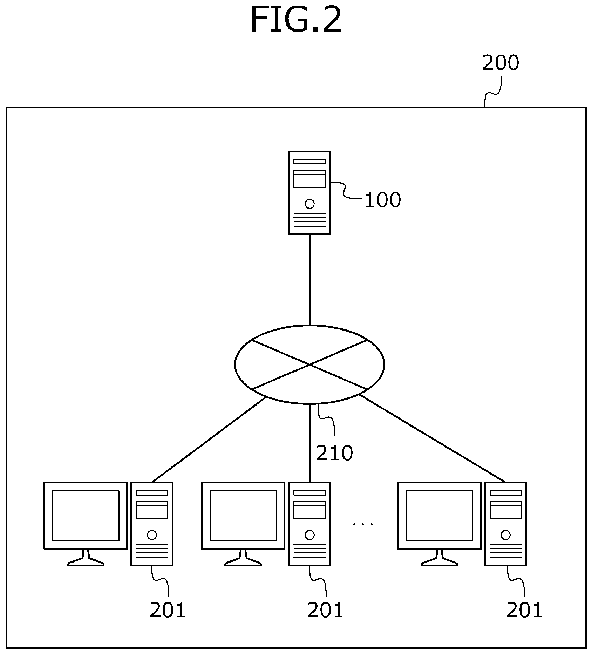

With reference to Fig. 2, an example of an information processing system 200 is described to which the information processing device 100 depicted in Fig. 1 is applied.

Fig. 2 is an explanatory view depicting an example of the information processing system 200. In Fig. 2, the information processing system 200 includes the information processing device 100 and one or more client devices 201.

In the information processing system 200, the information processing device 100 and the client devices 201 are connected via a wired or wireless network 210. The network 210 is, for example, a local area network (LAN), a wide area network (WAN), the Internet, or the like.

The information processing device 100 is a computer for calculating a solution to a 0-1 integer programming problem. The information processing device 100 receives a processing request from the client device 201, which requests the calculation of a solution to the 0-1 integer programming problem. The processing request includes, for example, the 0-1 integer programming problem. The processing request includes, for example, an objective function forming the 0-1 integer programming problem. The processing request includes, for example, constraint conditions forming the 0-1 integer programming problem. The information processing device 100 obtains, based on the received processing request, the objective function forming the 0-1 integer programming problem and the constraint conditions forming the 0-1 integer programming problem.

The information processing device 100 calculates, among the variables, the degree of relationship between variables based on the constraint conditions. The degree of relationship is, for example, an index value proportional to the number of constraint conditions in which two variables appear in common. For example, the degree of relationship between two variables is an index value whose value increases as the number of constraint conditions in which two variables appear in common increases.

The information processing device 100 identifies pairings of: a variable that appears only in a predetermined number of constraint conditions, which is less than the total number of constraint conditions, among the constraint conditions, and the predetermined number of constraint conditions in which the variable appears. The predetermined number is, for example, 1. For each identified pairing, the information processing device 100 registers, in the storage unit, first correlation information that correlates a variable of the pairing with another variable that appears in at least one of the predetermined number of constraint conditions of the pairing.

The information processing device 100 registers, in the storage unit, second correlation information that correlates at least one of the variables with another variable that has a certain degree of relationship with the at least one of the variables, based on the degree of relationship between variables among the variables. The information processing device 100 registers, in the storage unit, for example, second correlation information that correlates at least one of the variables with other variables that have a certain degree of relationship with the at least one of the variables, up to a specified number of other variables in descending order from the one with the largest degree of relationship with the at least one of the variables.

The information processing device 100 refers to the storage unit to search for a solution to the 0-1 integer programming problem, to thereby calculate a solution to the 0-1 integer programming problem. The information processing device 100 searches for a solution to the 0-1 integer programming problem by determining, for example, a group of any two or more variables correlated with each other among the variables as a value inversion object, based on the first correlation information and the second correlation information.

For example, the information processing device 100 performs a weighted local search method that is extended to determine, for example, a group of any two or more variables correlated with each other as a value inversion object, based on the first correlation information and the second correlation information. The information processing device 100 transmits the calculated solution to the 0-1 integer programming problem to the client device 201. The information processing device 100 is, for example, a server or a PC.

The client device 201 is a computer for setting a 0-1 integer programming problem. The client device 201 sets the 0-1 integer programming problem based on the user's operation input. The client device 201 sets, for example, an objective function forming the 0-1 integer programming problem and constraint conditions forming the 0-1 integer programming problem, based on the user's operation input.

The client device 201 generates a processing request that includes the set objective function forming the 0-1 integer programming problem and the set constraint conditions forming the 0-1 integer programming problem, the processing request further requests calculation of a solution to the 0-1 integer programming problem. The client device 201 transmits the generated processing request to the information processing device 100. The client device 201 receives a solution to the 0-1 integer programming problem from the information processing device 100. The client device 201 outputs the solution to the 0-1 integer programming problem so that the user can refer to the solution. The client device 201 is, for example, a PC, a tablet terminal, or a smartphone.

A case has been described in which the information processing device 100 is a computer different from the client device 201, but this is not limitative. For example, the information processing device 100 may have functions as the client device 201 and may also operate as the client device 201.

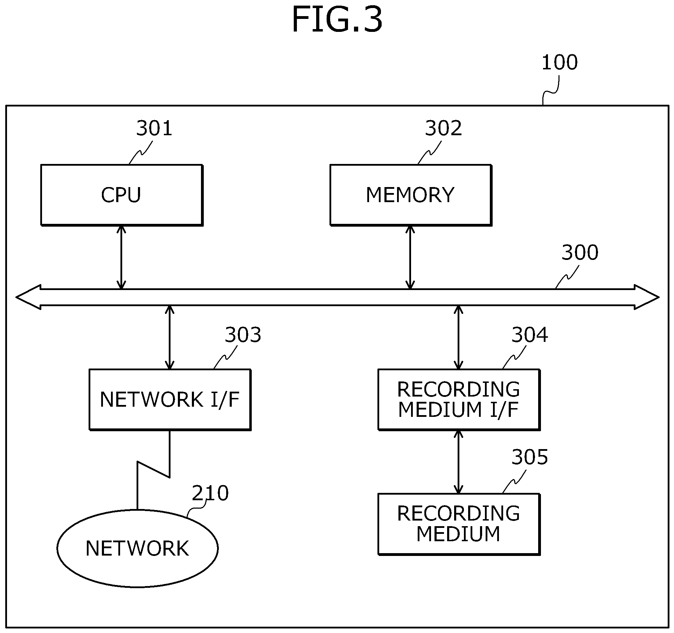

Next, with reference to Fig. 3, an example of a hardware configuration of the information processing device 100 is described.

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. The components are connected by a bus 300.

Herein. the CPU 301 governs overall control of the information processing device 100. The memory 302 includes, for example, a read-only memory (ROM), a random-access memory (RAM), and a flash ROM, etc. In particular, for example, the flash ROM and the ROM store various programs and the RAM is used as a work area of the CPU 301. Programs stored in the memory 302 are loaded onto the CPU 301, whereby encoded processes are executed by the CPU 301.

The network I/F303 is connected to a network 210 through a communications line and is connected to other computers via the network 210. Further, the network I/F 303 administers an internal interface with the network 210 and controls the input and output of data from other computers. The network I/F 303, for example, is a modem, a LAN adapter, or the like.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, etc. The recording medium 305 is a nonvolatile memory storing therein data written thereto under the control of the recording medium I/F 304. The recording medium 305 is, for example, a disk, a semiconductor memory, a USB memory, etc. The recording medium 305 may be removable from the information processing device 100.

The information processing device 100 may further have, for example, a keyboard, a mouse, a display, a printer, a scanner, a microphone, a speaker, etc. in addition to the components described. Further, the information processing device 100 may have the recording medium I/F 304 and/or the recording medium 305 in plural. The information processing device 100 may omit the recording medium I/F 304 and/or the recording medium 305.

An example of a hardware configuration of the client device 201, for example, is the same as the example of the hardware configuration of the information processing device 100 depicted in Fig. 3.

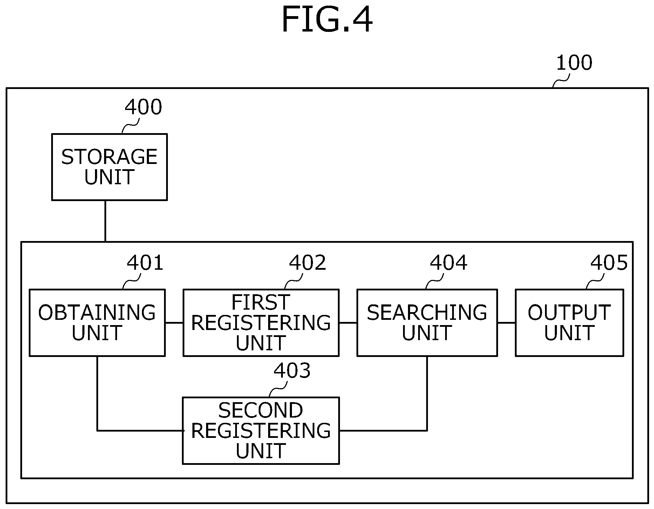

With reference to Fig. 4, an example of a functional configuration of the information processing device 100 is described.

Fig. 4 is a block diagram depicting an example of a functional configuration of the information processing device 100. The information processing device 100 includes a storage unit 400, an obtaining unit 401, a first registering unit 402, a second registering unit 403, a searching unit 404, and an output unit 405.

The storage unit 400 is implemented, for example, by a storage area such as the memory 302 and the recording medium 305 depicted in Fig. 3. In the following, a case is described where the storage unit 400 is included in the information processing device 100, but the present invention is not limited hereto. For example, the storage unit 400 may be included in a device different from the information processing device 100, and the storage contents of the storage unit 400 may be referred to by the information processing device 100.

The obtaining unit 401 to the output unit 405 function as, for example, a control unit. For example, functions of the obtaining unit 401 to the output unit 405 are implemented, for example, by causing the CPU 301 to execute a program stored in the storage area such as the memory 302 and the recording medium 305 depicted in Fig. 3, or by the network I/F 303. Processing results of each functional unit are stored to, for example, the storage area such as the memory 302 and the recording medium 305 depicted in Fig. 3.

The storage unit 400 stores therein various pieces of information that are referred to or updated in the processing by each functional unit. The storage unit 400 stores therein, for example, a 0-1 integer programming problem. The 0-1 integer programming problem is a 0-1 integer programming problem that includes variables each taking a value 0 or 1. The storage unit 400, for example, stores constraint conditions forming the 0-1 integer programming problem. The constraint condition is, for example, a mathematical expression including at least one or more variables among the variables. The constraint conditions are obtained by, for example, the obtaining unit 401.

The storage unit 400 stores, for example, an objective function forming the 0-1 integer programming problem. The objective function is a mathematical expression representing an evaluation value to be optimized. The evaluation value represents, for example, cost or profit. The optimization is, for example, minimization or maximization. For example, the evaluation value representing the cost is an object to be minimized. For example, the evaluation value representing the profit is an object to be maximized. The objective function further includes a product of the violation amount of each of the constraint conditions multiplied by a parameter serving as a coefficient so as to aim at reducing the violation amount of each of the constraint conditions. The objective function is obtained, for example, by the obtaining unit 401.

The storage unit 400 stores therein, for example, the degree of relationship between variables in the variables. The degree of relationship is, for example, an index value proportional to the number of constraint conditions in which two variables appear in common among the constraint conditions. For example, the degree of relationship between two variables is an index value whose value increases as the number of constraint conditions in which the two variables appear in common increases. The storage unit 400 stores therein, for example, correlation information that correlates two or more variables among the variables. The correlation information is generated, for example, by the first registering unit 402 or the second registering unit 403.

The storage unit 400 stores, for example, a provisional solution to the 0-1 integer programming problem. The provisional solution to the 0-1 integer programming problem is a combination of the values of the variables. The provisional solution to the 0-1 integer programming problem is calculated, for example, by the searching unit 404. The storage unit 400 stores therein, for example, a solution candidate to the 0-1 integer programming problem. The solution candidate to the 0-1 integer programming problem is a combination of the values of the variables. The solution candidate to the 0-1 integer programming problem is calculated, for example, by the searching unit 404.

The obtaining unit 401 obtains various pieces of information used in the processing by each functional unit. The obtaining unit 401 stores the obtained various pieces of information to the storage unit 400 or outputs the information to the functional units. The obtaining unit 401 may also output various pieces of information stored in the storage unit 400 to the functional units. The obtaining unit 401 obtains various pieces of information, for example, based on the user's operation input. The obtaining unit 401 may receive various pieces of information from, for example, a device different from the information processing device 100.

The obtaining unit 401 obtains, for example, a processing request requesting calculation of a solution to the 0-1 integer programming problem. The solution to the 0-1 integer programming problem is calculated by, for example, the searching unit 404. The processing request may include, for example, constraint conditions forming the 0-1 integer programming problem. The processing request may include, for example, an objective function forming the 0-1 integer programming problem. For example, the obtaining unit 401 obtains the processing request by receiving an input for the processing request based on the user's operation input. The obtaining unit 401, for example, obtains the processing request by receiving the processing request from another computer.

The obtaining unit 401 obtains, for example, constraint conditions forming the 0-1 integer programming problem. The obtaining unit 401 obtains the constraint conditions, for example, by extracting the constraint conditions from the obtained processing request. The obtaining unit 401 may obtain the constraint conditions, for example, by receiving input of the constraint conditions based on the user's operation input. The obtaining unit 401 may obtain the constraint conditions, for example, by receiving the constraint conditions from another computer.

The obtaining unit 401 obtains, for example, an objective function forming the 0-1 integer programming problem. The obtaining unit 401 obtains the objective function, for example, by extracting the objective function from the obtained processing request. The obtaining unit 401 may obtain the objective function, for example, by receiving input of the objective function based on the user's operation input. The obtaining unit 401 may obtain the objective function, for example, by receiving the objective function from another computer.

For example, when the obtained objective function does not include a product of the violation amount of each of the constraint conditions multiplied by a parameter serving as a coefficient, the obtaining unit 401 may extend the objective function to include the product. More specifically, the obtaining unit 401 extends the objective function by adding a product of the violation amount of each of the constraint conditions multiplied by a parameter serving as a coefficient, to the obtained objective function so as to reduce the violation amount of each of the constraint conditions.

The obtaining unit 401 may obtain, for example, an end instruction requesting output of a solution to the 0-1 integer programming problem. For example, the obtaining unit 401 obtains an end instruction by receiving an input of an end instruction based on the user's operation input. For example, the obtaining unit 401 obtains the end instruction by receiving the end instruction from another computer.

The obtaining unit 401 may receive a start trigger for starting processing of any one of the functional units. The start trigger is, for example, a predetermined operation input by the user. The start trigger may be, for example, a reception of predetermined information from another computer. The start trigger may be, for example, an output of predetermined information by any one of the functional units.

The obtaining unit 401, for example, obtains a processing request as a start trigger for starting processing by the first registering unit 402, the second registering unit 403, and the searching unit 404.

The first registering unit 402 generates first correlation information that correlates two or more variables among the variables, and registers the first correlation information in the storage unit 400. The first registering unit 402, for example, identifies pairings of: a variable that appears only in a predetermined number of constraint conditions that is less than the total number of constraint conditions among the constraint conditions, and the predetermined number of constraint conditions in which the variable appears. For example, for each of the identified pairings, the first registering unit 402 generates first correlation information that correlates a variable of the pairing with another variable that appears in at least one of the predetermined number of constraint conditions of the pairing, and registers the first correlation information in the storage unit 400. This enables the first registering unit 402 to identify a group of two or more variables for which it is desirable to attempt to invert the values, irrespective of the degree of relationship between the variables.

The first registering unit 402, for example, may not need to specify at once all pairings of: a variable that appears only in a predetermined number of constraint conditions, which is less than the total number of constraint conditions, among the constraint conditions and the predetermined number of constraint conditions in which the variables appear.

This allows the first registering unit 402 to reduce the amount of processing.

The second registering unit 403 generates second correlation information that correlates two or more variables among the variables, and registers the second correlation information in the storage unit 400. For example, the second registering unit 403 generates second correlation information that correlates at least one of the variables with another variable that has a certain degree of relationship with the at least one of the variables, based on the degree of relationship between the variables, and registers the second correlation information in the storage unit 400. This allows the second registering unit 403 to specify a group of two or more variables for which it is desirable to attempt to invert the values, depending on the degree of relationship between the variables.

For example, the second registering unit 403 may not need to generate at once all of the second correlation information, which correlates each of the variables with other variables that have a certain degree of relationship with the variables. This allows the second registering unit 403 to reduce the amount of processing.

The searching unit 404 refers to the storage unit 400 and determines, based on the first correlation information and the second correlation information, a group of any two or more correlated variables among the variables as an object for inverting values, thereby searching for a solution to the 0-1 integer programming problem. The predetermined number is, for example, 1. The predetermined number may be, for example, a number that is less than the total number of constraint conditions and is equal to or greater than 2. The predetermined number may be, for example, a fraction of the total number of constraint conditions.

For example, the searching unit 404 refers to the storage unit 400 and, based on the first correlation information and the second correlation information, repeatedly performs a series of processes for updating a provisional solution to the 0-1 integer programming problem until an ending condition is satisfied, thereby searching for a solution to the 0-1 integer programming problem. The ending condition is, for example, that the elapsed time from the first execution of the series of processes has exceeded a predetermined length of time.

The ending condition may be, for example, that the series of processes has been executed a predetermined number of times. The ending condition may be, for example, that the obtaining unit 401 has obtained an end instruction. The ending condition may be, for example, that the number of times by which the provisional solution to the 0-1 integer programming problem is not continuously updated has exceeded a predetermined threshold. The ending condition may be, for example, that the value of the objective function for the provisional solution has reached a predetermined value.

For example, the series of processes determine one or more groups each including any two or more correlated variables. For example, for each of the determined one or more groups, the series of processes identify solution candidates for the 0-1 integer programming problem, obtained by inverting the values of the group from the provisional solution to the 0-1 integer programming problem. For example, the series of processes determine, based on the objective function, whether there is any solution candidate among the identified solution candidates that brings the value of the objective function closer to an appropriate direction than the provisional solution. For example, when there is a solution candidate that brings the value of the objective function closer to an appropriate direction than the provisional solution, the provisional solution is updated with the solution candidate.

For example, the series of processes includes a first process. For example, for each of variables, the first process identifies a first solution candidate for the 0-1 integer programming problem, the first solution candidate being obtained by inverting the value of the variable from the provisional solution to the 0-1 integer programming problem. For example, based on the objective function, the first process determines whether there is any first solution candidate among the identified first solution candidates that brings the value of the objective function closer to an appropriate direction than the provisional solution. When there is any first solution candidate that brings the value of the objective function closer to an appropriate direction than the provisional solution, the first process updates the provisional solution with the any of the first solution candidates. This allows the searching unit 404 to appropriately update the provisional solution.

For example, the series of processes includes a second process. For example, when there is no first solution candidate that brings the value of the objective function closer to an appropriate direction than the provisional solution, the second process determines one or more groups each including any two correlated variables among the variables. For example, for each of the determined one or more groups, the second process identifies a second solution candidate for the 0-1 integer programming problem, the second solution candidate being obtained by inverting the value of the group from the provisional solution. For example, based on the objective function, the second process determines whether there is any second solution candidate among the identified second solution candidates that brings the value of the objective function closer to an appropriate direction than the provisional solution. For example, when there exists any second solution candidate that brings the value of the objective function closer to an appropriate direction than the provisional solution, the second process updates the provisional solution with the any of the second solution candidates. This allows the searching unit 404 to properly update the provisional solution.

For example, the series of processes includes a third process. For example, when there is no second solution candidate that brings the value of the objective function closer to an appropriate direction than the provisional solution, the third process determines one or more groups each including any three or four correlated variables among the variables. For example, for each of the determined one or more groups, the third process identifies a third solution candidate for the 0-1 integer programming problem, the third solution candidate being obtained by inverting the value of the group from the provisional solution. For example, based on the objective function, the third process determines whether there is any third solution candidate among the identified third solution candidates, that brings the value of the objective function closer to an appropriate direction than the provisional solution. For example, when there exists any third solution candidate that brings the value of the objective function closer to an appropriate direction than the provisional solution, the third process updates the provisional solution with the any of the third solution candidates. This allows the searching unit 404 to properly update the provisional solution.

The searching unit 404 may update a parameter that is a coefficient by which at least one of the constraint conditions is multiplied after the current execution of the series of processes. For example, the searching unit 404 determines whether the provisional solution was updated with the current execution of the series of processes. For example, if the provisional solution was updated with the current execution of the series of processes, the searching unit 404 performs the series of processes again without updating the parameter that is a coefficient by which any of the constraint conditions is multiplied. This allows the searching unit 404 to bring the provisional solution to the 0-1 integer programming problem closer to an optimal solution.

For example, the searching unit 404 determines whether the provisional solution was updated after the last update of the parameter that is a coefficient, but before the current execution of the series of processes. For example, there may be a case where the provisional solution is updated after the last update of the parameter that is a coefficient, but before the current execution of the series of processes, and a case where the provisional solution is not updated with the current execution of the series of processes. In this case, for example, the searching unit 404 updates a parameter that is a coefficient by which at least one of the constraint conditions is multiplied, to a value larger than the current value, and then performs a series of processes again. More specifically, the searching unit 404 updates a parameter that is a coefficient by which one of the constraint conditions with a relatively large violation amount is multiplied; the searching unit 404 updates the parameter to a value larger than the current value, and then performs a series of processes again. The searching unit 404 may thus bring the provisional solution to the 0-1 integer programming problem closer to an optimal solution so as not to violate the constraint conditions.

For example, there may be a case where the provisional solution is not updated during period from after the last update of the parameter that is a coefficient until the start of the current execution of the series of processes, and a case where the provisional solution is not updated with the current execution of the series of processes. In this case, for example, the searching unit 404 updates a parameter that is a coefficient by which at least one of the constraint conditions is multiplied, to a value smaller than the current value, and then performs a series of processes again. More specifically, the searching unit 404 updates the parameter, which is a coefficient by which each of the constraint conditions is multiplied, to a value smaller than the current value, and then performs the series of processes again. This allows the searching unit 404 to temporarily tolerate violations of the constraint conditions, facilitating bringing the provisional solution to the 0-1 integer programming problem closer to an optimal solution.

For example, the first registering unit 402 may again generate new first correlation information that correlates two or more variables among the variables in response to the searching unit 404 executing the series of processes, and may register the first correlation information in the storage unit 400. For example, the first registering unit 402 identifies pairings of: a variable that appears only in a predetermined number of constraint conditions, which is less than the total number of constraint conditions, among the constraint conditions, and the predetermined number of constraint conditions in which the variables appear. For example, for each of the identified pairings, the first registering unit 402 generates new first correlation information that correlates a variable of the pairing with another variable that appears in at least one of the predetermined number of constraint conditions of the pairing, and registers the new first correlation information in the storage unit 400. This allows the first registering unit 402 to identify a group of two or more variables for which it is desirable to attempt to invert the values, irrespective of the degree of relationship between the variables.

The second registering unit 403 may again generate new second correlation information that correlates two or more variables among the variables in response to, for example, the execution of a series of processes by the searching unit 404, and may register the new second correlation information in the storage unit 400. For example, the second registering unit 403 generates new second correlation information that correlates at least one of the variables with another variable that has a certain degree of relationship with the at least one of the variables, based on the degree of relationship between the variables, and registers the new second correlation information in the storage unit 400. This allows the second registering unit 403 to identify a group of two or more variables for which it is desirable to attempt to invert the values, depending on the degree of relationship between the variables.

The output unit 405 outputs the processing result of at least one of the functional units. The output format is, for example, display on a display, print output to a printer, transmission to an external device by the network I/F 303, or storage to the storage area such as the memory 302 and the recording medium 305. As a result, the output unit 405 may notify the user of the processing result of at least one of the functional units, improving the convenience of the information processing device 100.

For example, when the ending condition is satisfied, the output unit 405 outputs, as a solution to the 0-1 integer programming problem, the provisional solution to the 0-1 integer programming problem, the provisional solution having been updated by the searching unit 404. For example, the output unit 405 outputs the solution to the 0-1 integer programming problem so that the user may refer to the solution. For example, the output unit 405 may transmit the solution to the 0-1 integer programming problem to another computer. As a result, the output unit 405 may make the solution to the 0-1 integer programming problem available externally.

A flow of operations of the information processing device 100 are described. The information processing device 100 obtains an objective function and constraint conditions forming the 0-1 integer programming problem. The objective function is defined by, for example, Formula (1) above. The constraint conditions are defined by, for example, Formulae (2) to (4) above. The 0-1 integer programming problem aims at calculating a solution that minimizes the value of the objective function within a range satisfying the constraint conditions. The solution is a vector that represents combinations of values of variables. In the following description, N is a set of indexes of the variables.

Step 1: As preprocessing, the information processing device 100 sets a 0-vector indicating that the value of each of variables is 0 to a provisional solution to the 0-1 integer programming problem. As preprocessing, the information processing device 100 extends the objective function by adding, to the objective function, a term related to the violation amount of each constraint condition. For example, Formulae (5) to (8) below are defined.

$$M = M_L \cup M_E \ ... (5)$$

$$d_i(x) = \sum_{j \in N} a_{ij} x_j - b_i (i \in M) \ ... (6)$$

$$p_i^-(x) = \max\{0, -d_i(x)\} \ (i \in M_E) \ ... (7)$$

$$p_i^+(x) = \max\{0, d_i(x)\} \ (i \in M) \ ... (8)$$

"$p_i^-(x)$" represents the violation amount of any of the constraint conditions for a solution x. "$p_i^+(x)$" represents the violation amount of any of the constraint conditions for the solution x. Using $p_i^-(x)$ and $p_i^+(x)$, for example, the objective function is expanded to be defined by Formulae (9) and (10) below. "$w_i^-(i \in M_E)$" is a non-negative parameter. "$w_i^+(i \in M)$" is a non-negative parameter. In the following description, $w_i^-(i \in M_E)$ and $w_i^+(i \in M)$ may be written as "penalty coefficients".

$$\min_x \sum_{i \in N} c_j x_j + \sum_{i \in M_E} w_i^- p_i^-(x) + \sum_{i \in M} w_i^+ p_i^+(x) \ ... (9)$$

$$x_j \in \{0,1\} (j \in N) \ ... (10)$$

The information processing device 100 initializes a neighbor list for at least one of the variables. The neighbor list for at least one of the variables is a list that records other variables that may be objects for which values are inverted simultaneously with the at least one of the variables, when searching for a solution to the 0-1 integer programming problem. For example, the information processing device 100 extracts pairings of: a variable that appears only in one constraint condition, and the one constraint condition. Based on each of the extracted pairings, the information processing device 100 generates an initial list that records variables appearing only in the constraint condition of the pairing, to be set in a neighbor list for each of variables appearing in the constraint condition of the pairing.

As is described below, the information processing device 100 repeatedly performs a series of processes until the ending condition is satisfied and updates a provisional solution to the 0-1 integer programming problem, thereby searching for a solution to the 0-1 integer programming problem and calculating an appropriate solution to the 0-1 integer programming problem. The series of processes includes Steps 2 to 6 which follow.

Step 2: The information processing device 100 determines whether an ending condition is satisfied. The ending condition is, for example, that a predetermined time has elapsed from the first execution of the series of processes. The ending condition may be, for example, that the series of processes has been executed a predetermined number of times or more. The ending condition may be, for example, that an end instruction has been received by the information processing device 100 based on the user's operation input. If the ending condition is satisfied, the information processing device 100 outputs the provisional solution to the 0-1 integer programming problem as a solution to the 0-1 integer programming problem. If the ending condition is not satisfied, the information processing device 100 proceeds to Step 3.

Step 3: The information processing device 100 performs a 1-flip neighborhood search process. For example, for each of multiple variables, the information processing device 100 calculates a solution candidate by inverting only the value of the variable from the provisional solution to the 0-1 integer programming problem. For example, the information processing device 100 determines whether there are one or more solution candidates among the calculated solution candidates that bring the value of the objective function closer to an appropriate direction than the provisional solution to the 0-1 integer programming problem. The appropriate direction is, for example, the direction of minimization.

For example, if there are one or more solution candidates that bring the value of the objective function closer to the appropriate direction, the information processing device 100 selects one of the one or more solution candidates that brings the value of the objective function closer to the most appropriate direction. For example, the information processing device 100 updates the provisional solution to the 0-1 integer programming problem with the selected one solution candidate and returns to the process at Step 2. On the other hand, for example, if there are no solution candidates that bring the value of the objective function closer to the appropriate direction, the information processing device 100 proceeds to the process at Step 4. This allows the information processing device 100 to bring the provisional solution to the 0-1 integer programming problem closer to an optimal solution.

Step 4: The information processing device 100 performs a 2-flip neighborhood search process. The 2-flip neighborhood search process includes Steps 4-1 to 4-4 which follow.

Step 4-1: The information processing device 100 selects, for example, a j-th variable $x_j$ and obtains a neighbor list for the variable $x_j$. "j" has an initial value 1.

Step 4-2: For example, if a degree of relationship assoc(j,k) between the selected variable $x_j$ and any of the other variables $x_k$ has not been calculated, the information processing device 100 calculates the degree of relationship assoc(j,k) between the selected variable $x_j$ and each of the other variables $x_k$. For example, before proceeding to the process at Step 4-3, the information processing device 100 calculates the degree of relationship assoc(j,k) between the variable $x_j$ and each of the other variables $x_k$ according to Formula (11) below, where $a_{ij}$ is a coefficient by which the variable $x_j$ is multiplied, and $a_{ik}$ is a coefficient by which the variable $x_k$ is multiplied. For example, if the information processing device 100 has already calculated the relationship degree assoc(j,k) between the selected variable $x_j$ and each of the other variables $x_k$, it obtains the relationship degree assoc(j,k) and proceeds to the process at Step 4-4

$$assoc(j,k) = \sum_{i \in M_L} a_{ij} a_{ik} + \sum_{i \in M_E} a_{ij} a_{ik} \dots (11)$$

Step 4-3: The information processing device 100 adds, for example, C other variables $x_k$ in descending order from one having the largest calculated relationship degree assoc(j,k) among the other variables $x_k$, to the neighbor list for the selected variable $x_j$ and proceeds to the process at Step 4-4.

Step 4-4: For example, based on the neighbor list, the information processing device 100 identifies all groups that combine two variables that can be formed by the selected variable $x_j$ and any one of the other variables $x_k$ recorded in the neighbor list. For example, for each of the identified groups, the information processing device 100 calculates a solution candidate by inverting only the values of the variables belonging to that group, from the provisional solution to the 0-1 integer programming problem. The information processing device 100 determines whether there are one or more solution candidates among the calculated solution candidates that bring the value of the objective function closer to an appropriate direction than the provisional solution to the 0-1 integer programming problem. The appropriate direction is, for example, the direction of minimization.

If there are one or more solution candidates that bring the value of the objective function closer to the appropriate direction, the information processing device 100 selects one of the solution candidates that brings the value of the objective function closer to the most appropriate direction among the one or more solution candidates. The information processing device 100 updates the provisional solution to the 0-1 integer programming problem with any of the selected solution candidates and returns to the processing at Step 2.

On the other hand, when there are no solution candidates that bring the value of the objective function closer to the appropriate direction, and when j<N, the information processing device 100 increments j and returns to Step 4-1. If there are no one or more solution candidates that bring the value of the objective function closer to the appropriate direction, and if j=N, the information processing device 100 proceeds to the process at Step 5. This allows the information processing device 100 to bring the provisional solution to the 0-1 integer programming problem closer to an optimal solution.

Step 5: The information processing device 100 performs a (3,4)-flip neighborhood search process. The (3,4)-flip neighborhood search process includes Steps 5-1 to 5-4 which follow.

Step 5-1: The information processing device 100 selects, for example, a j-th variable $x_j$ and obtains a neighbor list for the variable xj. "j" has an initial value 1.

Step 5-2: For example, if a degree of relationship assoc(j,k) between the selected variable $x_j$ and any of the other variables $x_k$ has not been calculated, the information processing device 100 calculates the degree of relationship assoc(j,k) between the selected variable $x_j$ and each of the other variables $x_k$. For example, before proceeding to the process at Step 5-3, the information processing device 100 calculates the degree of relationship assoc(j,k) between the variable $x_j$ and each of the other variables $x_k$ according to Formula (11) above. For example, if the information processing device 100 has already calculated the relationship degree assoc(j,k) between the selected variable $x_j$ and each of the other

variables $x_k$, it obtains the relationship degree assoc(j,k) and proceeds to the process at Step 5-4

Step 5-3: The information processing device 100 adds, for example, C other variables $x_k$ in descending order from one having the largest calculated relationship degree assoc(j,k) among the other variables $x_k$, to the neighbor list for the selected variable $x_j$ and proceeds to the process at Step 5-4.

Step 5-4: For example, based on the neighbor list, the information processing device 100 identifies all groups that combine three variables that can be formed by the selected variable $x_j$ and any two of the other variables $x_k$ recorded in the neighbor list. For example, for each of the identified groups, the information processing device 100 calculates a solution candidate by inverting only the values of the variables belonging to that group, from the provisional solution to the 0-1 integer programming problem. The information processing device 100 determines whether there are one or more solution candidates among the calculated solution candidates that bring the value of the objective function closer to an appropriate direction than the provisional solution to the 0-1 integer programming problem. The appropriate direction is, for example, the direction of minimization.

If there are one or more solution candidates that bring the value of the objective function closer to the appropriate direction, the information processing device 100 selects one of the solution candidates that brings the value of the objective function closer to the most appropriate direction among the one or more solution candidates. The information processing device 100 updates the provisional solution to the 0-1 integer programming problem with any of the selected solution candidates and returns to the processing at Step 2.

On the other hand, when there are no solution candidates that bring the value of the objective function closer to the appropriate direction, and when j<N, the information processing device 100 increments j and returns to Step 5-1. If there are no one or more solution candidates that bring the value of the objective function closer to the appropriate direction, and if j=N, the information processing device 100 proceeds to the process at Step 6. This allows the information processing device 100 to bring the provisional solution to the 0-1 integer programming problem closer to an optimal solution.

Step 6: If the information processing device 100 does not update the provisional solution to the 0-1 integer programming problem with the current execution of the series of processes, the information processing device 100 adjusts a penalty coefficient. The larger is the penalty coefficient value, the easier it is to find a provisional solution to the 0-1 integer programming problem that does not violate the constraint condition. On the other hand, it tends to be easier to search for an appropriate solution to the 0-1 integer programming problem accurately and efficiently by going through a provisional solution to the 0-1 integer programming problem, that violates a constraint condition than not going through the provisional solution to the 0-1 integer programming problem, that violates a constraint condition. Thus, in order to facilitate an accurate and efficient search for an appropriate solution to the 0-1 integer programming problem, there may be a situation in which it is preferable to reduce the value of the penalty coefficient.

Step 6-1: For example, if the information processing device 100 has never updated the penalty coefficient, the information processing device 100 updates the penalty coefficient corresponding to at least one of the constraint conditions, to a value larger than the current value. For example, the information processing device 100 identifies one or more constraint conditions that are violated by the provisional solution, based on the provisional solution to the 0-1 integer programming problem. For example, the information processing device 100 updates the penalty coefficient corresponding to each of the identified one or more constraint conditions, to a value larger than the current values. After that, the information processing device 100 returns to the process at Step 2.

For details on a value larger than the current value, to which the penalty coefficient should be updated, reference can be made to Umetani Shunji, "Exploiting variable associations to configure efficient local search algorithms in large-scale binary integer programs." European Journal of Operational Research 263.1 (2017): 72-81. Thus, the information processing device 100 may reduce the amount of violation on the constraint conditions, facilitating updating of the provisional solution to the 0-1 integer programming problem so as not to violate the constraint conditions and thereby facilitating searching for a solution to the 0-1 integer programming problem with high accuracy.

Step 6-2: For example, if the provisional solution to the 0-1 integer programming problem has been updated one or more times after the penalty coefficient was most recently updated, the information processing device 100 updates the penalty coefficient corresponding to at least one of the constraint conditions, to a value larger than the current value. For example, the information processing device 100 identifies one or more constraint conditions that are violated by the provisional solution to the 0-1 integer programming problem, based on the provisional solution to the 0-1 integer programming problem. For example, the information processing device 100 updates the penalty coefficient corresponding to each of the identified one or more constraint conditions, to a value larger than the current value. Afterward, the information processing device 100 returns to the process at Step 2.

For details on a value larger than the current value, to which the penalty coefficient should be updated, reference can be made to Umetani Shunji, "Exploiting variable associations to configure efficient local search algorithms in large-scale binary integer programs." European Journal of Operational Research 263.1 (2017): 72-81. Thus, the information processing device 100 may reduce the amount of violation on the constraint conditions, facilitating updating of the provisional solution to the 0-1 integer programming problem so as not to violate the constraint conditions and thereby facilitating searching for a solution to the 0-1 integer programming problem with high accuracy.

Step 6-3: For example, if the provisional solution to the 0-1 integer programming problem has not updated after the penalty coefficient was most recently updated, the information processing device 100 updates the penalty coefficient corresponding to at least one of the constraint conditions, to a value smaller than the current value. For example, the information processing device 100 updates the penalty coefficient corresponding to each of the constraint conditions to a value smaller than the current value. For example, the information processing device 100 may update the penalty coefficient corresponding to each of two or more constraint conditions at a certain ratio among the constraint conditions, to a value smaller than the current value. Thereafter, the information processing device 100 returns to the process at Step 2. This makes it easier for the information processing device 100 to accurately and efficiently search for an appropriate solution to the 0-1 integer programming problem via a provisional solution to the 0-1 integer programming problem, that violates the constraint conditions.

As described, the information processing device 100 may accurately and efficiently calculate an appropriate solution to a 0-1 integer programming problem in which a variable appearing in only one constraint condition is present. For example, the information processing device 100 may accurately and efficiently calculate an appropriate solution to a 0-1 integer programming problem, that includes a bin-packing constraint or the like as expressed in Formula 12 below.

$$\sum a_{ij} x_j \leq b_i y_i \ldots (12)$$

For example, in the conventional method described in Umetani, an appropriate solution to the 0-1 integer programming problem is searched for based on only the degree of relationship between variables. Therefore, for a 0-1 integer programming problem that includes the bin-packing constraint or the like and that has a variable appearing in only one constraint condition, the conventional method cannot efficiently search for an appropriate solution to the 0-1 integer programming problem with high accuracy.

In contrast, the information processing device 100 may search for an appropriate solution to the 0-1 integer programming problem by considering a variable appearing in only one constraint condition in addition to the degree of relationship between variables. Thus, even for the 0-1 integer programming problem that includes the bin-packing constraint and that has a variable appearing in only one constraint condition, the information processing device 100 may search for an appropriate solution to the 0-1 integer programming problem with high accuracy and efficiency.

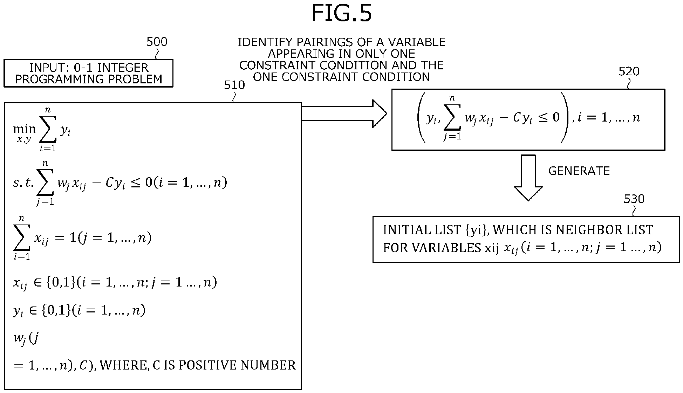

With reference to Fig. 5, an example of operation of the information processing device 100 is described.

Fig. 5 is an explanatory view depicting an example of operation of the information processing device 100. In Fig. 5, the information processing device 100 obtains a 0-1 integer programming problem 500 that includes variables $x_{ij}$ and $y_i$. The information processing device 100 obtains, for example, information 510 that defines the 0-1 integer programming problem 500.

The information 510 includes, for example, an objective function defined by Formula (13) below. The information 510 includes, for example, constraint conditions defined by Formulae (14) to (17) below. "$w_j$ (j=1, ..., n)" is a positive number. C is a positive number. A variable $x_{ij}$ is a variable that appears in two or more constraint conditions. A variable $y_i$ is a variable that appears in only one constraint condition.

$$\min_{x,y} \sum_{i=1}^{n} y_i \ldots (13)$$

$$\sum_{j=1}^{n} w_j x_{ij} - C y_i \leq 0 (i = 1, \ldots, n) \ldots (14)$$

$$\sum_{i=1}^{n} x_{ij} = 1 (j = 1, \ldots, n) \ldots (15)$$

$$x_{ij} \in \{0,1\} (i = 1, \ldots, n; j = 1 \ldots, n) \ldots (16)$$

$$y_i \in \{0,1\} (i = 1, \ldots, n) \ldots (17)$$

As preprocessing, the information processing device 100 sets a 0-vector indicating that the value of each of the variables is 0 in a provisional solution to the 0-1 integer programming problem 500. As preprocessing, the information processing device 100 extends the objective function by adding, to the objective function, a term related to the amount of violation on each of the constraint conditions.

The information processing device 100 identifies pairings 520 of a variable $y_i$ appearing in only one constraint condition and the one constraint condition. For each of the identified pairings 520, the information processing device 100 generates and stores an initial list 530{$y_i$}, which is a neighbor list for the variables $x_{ij}$ (i=1, ..., n; j=1, ..., n) appearing in the each of the identified pairings 520. The neighbor list is a list that records other variables $x_{ij}$ or variables $y_i$ whose values may be inverted simultaneously with the variable $x_{ij}$.

The information processing device 100 searches for a solution to the 0-1 integer programming problem 500 by updating a provisional solution to the 0-1 integer programming problem 500 while attempting to invert the values of one or more variables based on the initial list 530 and the degree of relationship between the variables. The search is implemented, for example, by repeatedly executing a series of processes and updating a provisional solution to the 0-1 integer programming problem 500 until the ending condition is satisfied. For example, the search is implemented by Steps 2 to 6 described above.

This allows the information processing apparatus 100 to make the 0-1 integer programming problem 500 easier to solve. The information processing device 100, for example, enables accurate calculation of a solution to the 0-1 integer programming problem 500, and enables efficient calculation of a solution to the 0-1 integer programming problem 500. For example, the information processing device 100 may reduce the time required to calculate the solution to the 0-1 integer programming problem 500. For example, the information processing device 100 may determine, as an object for inverting values, a group including a variable that appears in only one constraint condition, which would not be subject to value inversion when referring only to the degree of relationship, thereby making it easier to solve the 0-1 integer programming problem 500.

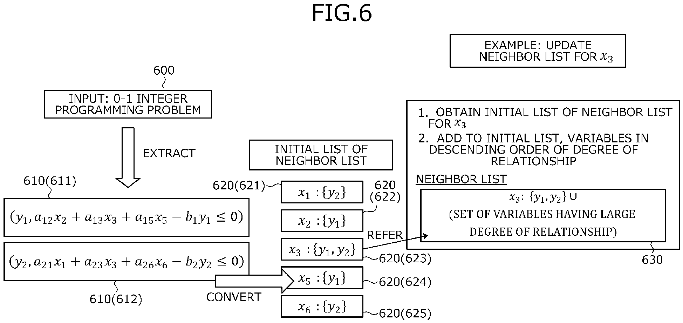

With reference to Fig. 6, a specific example of the operation of the information processing device 100 is described.

Fig. 6 is an explanatory view depicting a specific example of the operation of the information processing device 100. In Fig. 6, the information processing device 100 obtains a 0-1 integer programming problem 600. As preprocessing, the information processing device 100 sets a 0 vector, which indicates that the value of each of variables is 0, to a provisional solution to the 0-1 integer programming problem 600. As preprocessing, the information processing device 100 extends the objective function by adding, to the objective function, a term related to the amount of violation on each of constraint conditions.

The information processing device 100 identifies pairings 610 of a variable $y_i$ that appears only in one constraint condition and the one constraint condition. For each of the identified pairings 610, the information processing device 100 generates and stores an initial list 620, which is a neighbor list for the variables appearing in the each of the pairings 610.

For example, the information processing device 100 adds a variable yi of a pairing 611 to an initial list 622, which is a neighbor list for a variable $x_2$ appearing in a constraint condition of the pairing 611. For example, the information processing device 100 adds the variable yi of the pairing 611 to an initial list 623, which is a neighbor list for a variable $x_3$ appearing in a constraint condition of the pairing 611. For example, the information processing device 100 adds the variable yi of the pairing 611 to an initial list 624, which is a neighbor list for a variable $x_5$ appearing in a constraint condition of the pairing 611.

For example, the information processing device 100 adds a variable $y_2$ of a pairing 612 to an initial list 621, which is a neighbor list for a variable $x_1$ appearing in a constraint condition of the pairing 612. For example, the information processing device 100 adds the variable $y_2$ of the pairing 612 to an initial list 623, which is a neighbor list for a variable $x_3$ appearing in a constraint condition of the pairing 612. For example, the information processing device 100 adds the variable $y_2$ of the pairing 612 to an initial list 625, which is a neighbor list for a variable $x_6$ appearing in a constraint condition of the pairing 612.

The information processing device 100 searches for a solution to the 0-1 integer programming problem 600 by updating the provisional solution to the 0-1 integer programming problem 600 while attempting to invert the value of one or more variables based on the initial list 620 and the degree of relationship between the variables. The search is implemented, for example, by repeatedly executing a series of processes and updating the provisional solution to the 0-1 integer programming problem 600 until the ending condition is satisfied. For example, the search is implemented by Steps 2 to 6 described above.

During the search, the information processing device 100 may update the neighbor list for the selected variable in Steps 4 and 5 described above. For example, the information processing device 100 first obtains a neighbor list for the variable $x_3$ where the initial list 623 is set. For example, based on the degree of relationship between variables, the information processing device 100 adds, to the obtained neighbor list, a specified number of other variables in descending order from one (inclusive) having the greatest degree of relationship with the variable $x_3$ and thereby, updates the neighbor list. The neighbor list after the update is a list 630.

This allows the information processing device 100 to facilitate solving the 0-1 integer programming problem 600. For example, the information processing device 100 enables accurate calculation of a solution to the 0-1 integer programming problem 600 and efficient calculation of a solution to the 0-1 integer programming problem 600. For example, the information processing device 100 may reduce the time required to calculate the solution to the 0-1 integer programming problem 600. For example, the information processing device 100 may determine, as an object for inverting values, a group including a variable that appears in only one constraint condition, which would not be an object for inverting values when only the degree of relationship is referred to, and may facilitate solving the 0-1 integer programming problem 600.

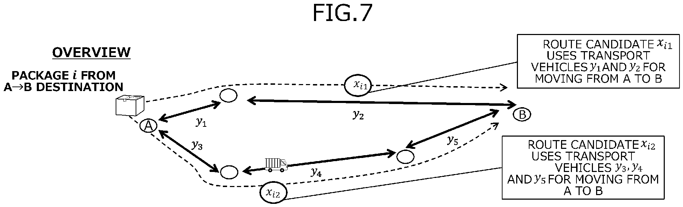

With reference to Fig. 7, an example of application of the information processing device 100 is described.

Fig. 7 is an explanatory view depicting an example of application of the information processing device 100. In Fig. 7, the information processing device 100 is applied to a 0-1 integer programming problem that represents a real logistics problem of determining which package should be transported via which route. For example, the 0-1 integer programming problem assumes that one delivery route for each package i=1, ..., n is selected from a set $R_i$ of route candidates that have been set. For example, the 0-1 integer programming problem assumes that transport vehicles to be used for transportation have been determined for each route candidate.

For each transport vehicle k=1, ..., m, a set $S_{ik} \subseteq R_i$ of route candidates for a package i=1, ..., n is defined that may be implemented using a transport vehicle k. For example, for a package i, a route candidate $x_{i1}$ exists for moving from A to B using transport vehicles yi and $y_2$. For example, for a package i, a route candidate $x_{i2}$ exists for moving from A to B using transport vehicles $y_3$, $y_4$, and $y_5$. The cost of each transport vehicle k=1, ..., m is $c_k$.

For example, the 0-1 integer programming problem aims at selecting a delivery route for each package that minimizes the total cost of the transport vehicles used. For example, the 0-1 integer programming problem includes a variable $x_{ij} \in \{0,1\}$ (i=1, ..., n; j∈$R_i$) and a variable $y_k \in \{0,1\}$ (k=1, ..., m). The variable $x_{ij}$ is 1 when a route candidate j for the package i is adopted and is 0 when the route candidate j for the package i is not adopted. The variable $y_k$ is 1 when the transport vehicle k is used and is 0 when the transport vehicle k is not used. The objective function is defined by, for example, Formula (18) below.

$$\sum_{k=1}^{m} c_k y_k \quad \dots (18)$$

The constraint conditions are defined by, for example, Formulae (19) and (20) below. Formula (19) below expresses that one delivery route for each package i is selected from the set Ri of candidate routes. Formula (20) below expresses that when a transport vehicle k is used, a set of candidate routes corresponding to the transport vehicle k is selectable. "m" is a positive constant that is greater than or equal to a certain value.

$$\sum_{j \in R_i} x_{ij} = 1 (i = 1, \dots, n) \dots (19)$$

$$\sum_{i=1}^{n} \sum_{j \in S_{ik}} x_{ij} - My_k \leq 0 (k = 1, \dots, m) \quad \dots (20)$$

The information processing device 100 may accurately and efficiently calculate a solution to the 0-1 integer programming problem even when there is a variable $y_k$ that appears only in Formula (20) above. Hence, the information processing device 100 may accurately and efficiently determine a delivery route for each package that minimizes the total cost of the transport vehicles used.

For example, the information processing device 100 may be applied to a 0-1 integer programming problem for minimizing the number of containers used when packing packages into a container or the like. For example, the information processing device 100 may be applied to a manufacturing field, etc., other than the real logistics problems. For example, the information processing device 100 may be applied to a 0-1 integer programming problem that represents the cutting of wood or iron plates.

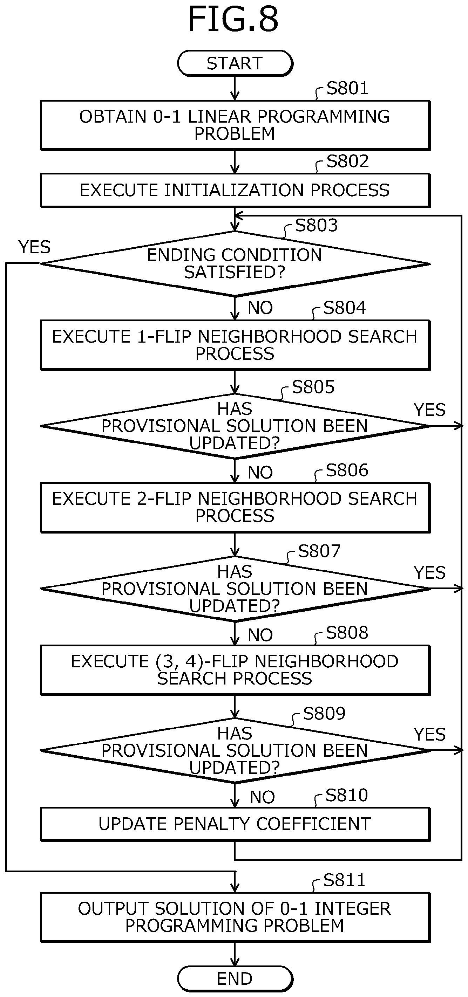

With reference to Fig. 8, an example of an overall processing procedure executed by the information processing device 100 is described. The overall processing is implemented, for example, by the CPU 301, the storage area such as the memory 302 and the recording medium 305, and the network I/F 303, depicted in Fig. 3.

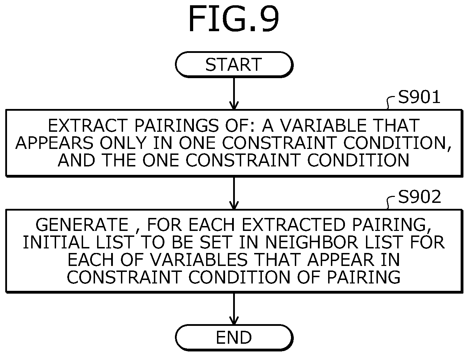

Fig. 8 is a flowchart depicting an example of the overall processing procedure. In Fig. 8, the information processing device 100 obtains a 0-1 linear programming problem (step S801). The information processing device 100 executes an initialization process that is described later in Fig. 9 (step S802).

The information processing device 100 determines whether an ending condition is satisfied (step S803). If the ending condition is satisfied (step S803: YES), the information processing device 100 proceeds to processing at step S811. On the other hand, if the ending condition is not satisfied (step S803: NO), the information processing device 100 proceeds to processing at step S804.

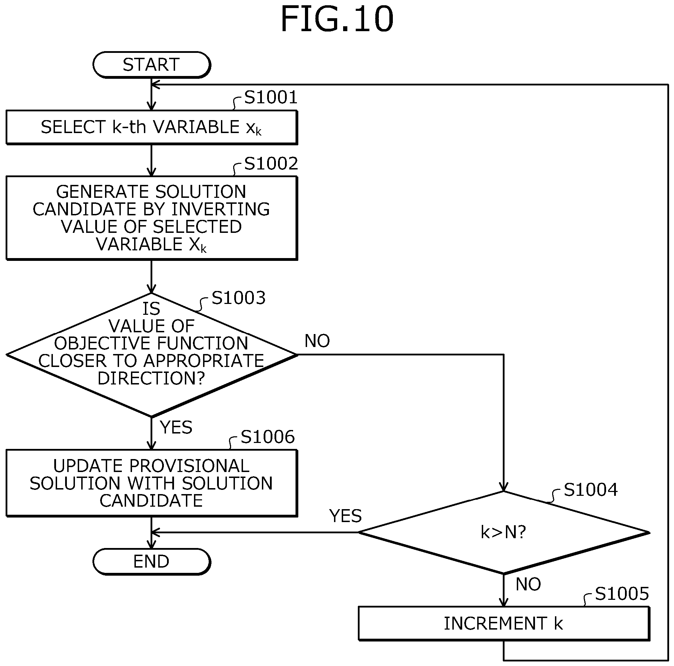

At step S804, the information processing device 100 executes a 1-flip neighborhood search process that is described later in Fig. 10 (step S804). The information processing device 100 determines whether a provisional solution has been updated (step S805). If the provisional solution has been updated (step S805: YES), the information processing device 100 returns to the processing at step S803. On the other hand, if the provisional solution has not been updated (step S805: NO), the information processing device 100 proceeds to processing at step S806.

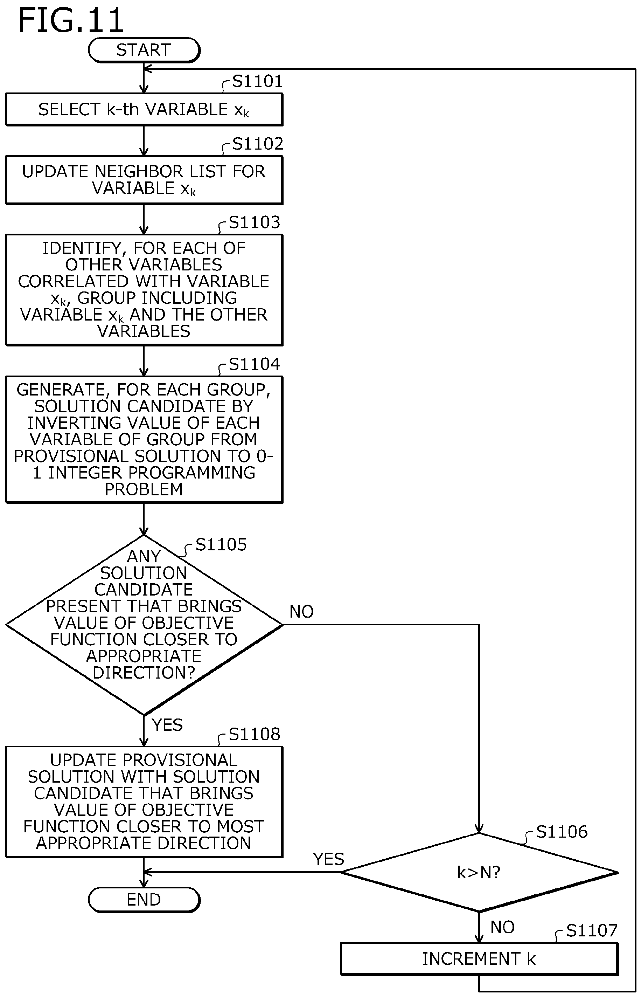

At step S806, the information processing device 100 executes a 2-flip neighborhood search process that is described later in Fig. 11 (step S806). The information processing device 100 determines whether the provisional solution has been updated (step S807). If the provisional solution has been updated (step S807: YES), the information processing device 100 returns to the processing at step S803. On the other hand, if the provisional solution has not been updated (step S807: NO), the information processing device 100 proceeds to processing at step S808.

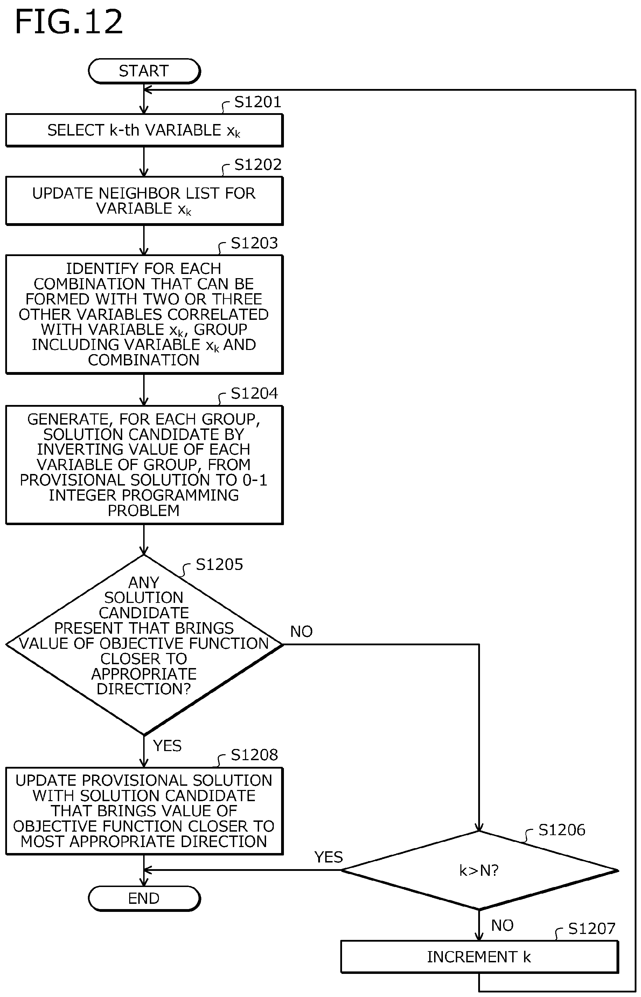

At step S808, the information processing device 100 executes a (3, 4)-flip neighborhood search process that is described later in Fig. 12 (step S808). The information processing device 100 determines whether the provisional solution has been updated (step S809). If the provisional solution has been updated (step S809: YES), the information processing device 100 returns to the processing at step S803. On the other hand, if the provisional solution has not been updated (step S809: NO), the information processing device 100 proceeds to processing at step S810.

At step S810, the information processing device 100 updates a penalty coefficient (step S810). For example, when updating the penalty coefficient for the first time, the information processing device 100 updates the penalty coefficient to a value larger than the current value. For example, if the provisional solution has been updated at least once after the most recent update of the penalty coefficient, the information processing device 100 updates the penalty coefficient to a value larger than the current value. For example, if the provisional solution has not been updated even once after the most recent update of the penalty coefficient, the information processing device 100 updates the penalty coefficient to a value smaller than the current value. The information processing device 100 returns to the processing at step S803.

At step S811, the information processing device 100 outputs a solution for the 0-1 integer programming problem (step S811). The information processing device 100 ends the entire processing.

With reference to Fig. 9, an example of an initialization processing procedure executed by the information processing device 100 is described. The initialization process is implemented, for example, by the CPU 301, the storage area such as the memory 302 and the recording medium 305, and the network I/F 303, depicted in Fig. 3.

Fig. 9 is a flowchart depicting an example of the initialization processing procedure. In Fig. 9, the information processing device 100 extracts pairings of: a variable that appears only in one constraint condition and the one constraint condition (step S901). The information processing device 100 generates an initial list to be set in the neighbor list for each of the variables that appear in each constraint condition of the extracted pairings (step S902). The information processing device 100 terminates the initialization process.

With reference to Fig. 10, an example of the 1-flip neighborhood search processing procedure executed by the information processing device 100 is described. The 1-flip neighborhood search process is implemented, for example, by the CPU 301, the storage area such as the memory 302 and the recording medium 305, and the network I/F 303, depicted in Fig. 3.

Fig. 10 is a flowchart depicting an example of the 1-flip neighborhood search processing procedure. In Fig. 10, the information processing device 100 selects a k-th variable $x_k$ (step S1001). The information processing device 100 generates a solution candidate by inverting the value of the selected variable $x_k$ from the provisional solution to the 0-1 integer programming problem (step S1002).

The information processing device 100 determines, based on the objective function, whether the generated solution candidate brings the value of the objective function closer to an appropriate direction than the provisional solution (step S1003). When the generated solution candidate brings the value of the objective function closer to an appropriate direction than the provisional solution (step S1003: YES), the information processing device 100 proceeds to processing at step S1006. On the other hand, when the provisional solution brings the value of the objective function closer to an appropriate direction than the generated solution candidate (step S1003: NO), the information processing device 100 proceeds to processing at step S1004.

At step S1004, the information processing device 100 determines whether k>N is satisfied (step S1004). When k>N is satisfied (step S1004: YES), the information processing device 100 ends the 1-flip neighborhood search process. On the other hand, when k>N is not satisfied (step S1004: NO), the information processing device 100 increments k (step S1005) and returns to the processing at step S1001.

At step S1006, the information processing device 100 updates the provisional solution with the generated solution candidate (step S1006). The information processing device 100 ends the 1-flip neighborhood search process.

With reference to Fig. 11, an example of the 2-flip neighborhood search processing procedure executed by the information processing device 100 is described. The 2-flip neighborhood search process is implemented, for example, by the CPU 301, the storage area such as the memory 302 and the recording medium 305, and the network I/F 303, depicted in Fig. 3.

Fig. 11 is a flowchart depicting an example of the 2-flip neighborhood search processing procedure. In Fig. 11, the information processing device 100 selects a k-th variable $x_k$ (step S1101). The information processing device 100 generates a solution candidate by inverting the value of the selected variable $x_k$ from the provisional solution to the 0-1 integer programming problem (step S1102).

Based on the neighbor list for the variable $x_k$, the information processing device 100 identifies, for each of other variables correlated with the variable $x_k$, a group including the variable $x_k$ and the each of the other variables (step S1103). For each of the identified groups, the information processing device 100 generates a solution candidate by inverting the values of variables of the group from the provisional solution to the 0-1 integer programming problem (step S1104).

Based on the objective function, the information processing device 100 determines whether among the generated solution candidates, there is any solution candidate that brings the value of the objective function closer to an appropriate direction than the provisional solution (step S1105). When any such solution candidate is present (step S1105: YES), the information processing device 100 proceeds to processing at step S1108. On the other hand, when no such solution candidate is present (step S1105: NO), the information processing device 100 proceeds to processing at step S1106.

At step S1106, the information processing device 100 determines whether k>N is satisfied (step S1106). When k>N is satisfied (step S1106: YES), the information processing device 100 ends the 2-flip neighborhood search process. On the other hand, when k>N is not satisfied (step S1106: NO), the information processing device 100 increments k (step S1107) and returns to the processing at step S1101.

At step S1108, the information processing device 100 updates the provisional solution with any solution candidate that, among the generated solution candidates, brings the value of the objective function closer to the most appropriate direction (step S1108). The information processing device 100 ends the 2-flip neighborhood search process.

With reference to Fig. 12, an example of a (3,4)-flip neighborhood search processing procedure executed by the information processing device 100 is described. The (3,4)-flip neighborhood search processing is implemented, for example, by the CPU 301, the storage area such as the memory 302 and the recording medium 305, and the network I/F 303, depicted in Fig. 3.

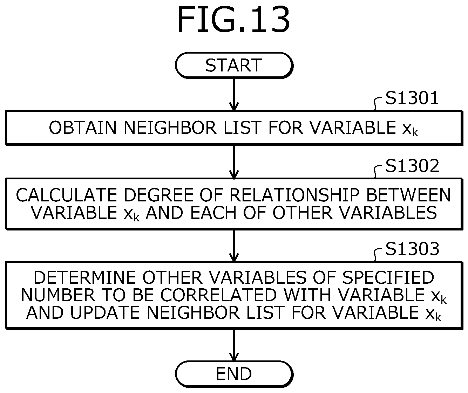

Fig. 12 is a flowchart depicting an example of the (3,4)-flip neighborhood search processing procedure. In Fig. 12, the information processing device 100 selects the k-th variable $x_k$ (step S1201). When the neighbor list for the variable $x_k$ remains unchanged from the initial list, the information processing device 100 executes a generation process that is described later in Fig. 13 and thereby, updates the neighbor list for the variable $x_k$ (step S1202).

Based on the neighbor list for the variable $x_k$, the information processing device 100 identifies, for each of combination that can be formed with two or three other variables correlated with the variable $x_k$, a group including the variable $x_k$ and the combination (step S1203). For each of the identified groups, the information processing device 100 generates a solution candidate by inverting the values of variables of the group from the provisional solution to the 0-1 integer programming problem (step S1204).

Based on the objective function, the information processing device 100 determines whether among the generated solution candidates, there is any solution candidate that brings the value of the objective function closer to an appropriate direction than the provisional solution (step S1205). When any such solution candidate is present (step S1205: YES), the information processing device 100 proceeds to processing at step S1208. On the other hand, when no such solution candidate is present (step S1205: NO), the information processing device 100 proceeds to processing at step S1206.

At step S1206, the information processing device 100 determines whether k>N is satisfied (step S1206). When k>N is satisfied (step S1206: YES), the information processing device 100 ends the (3, 4)-flip neighborhood search process. On the other hand, when k>N is not satisfied (step S1206: NO), the information processing device 100 increments k (step S1207) and returns to the processing at step S1201.

At step S1208, the information processing device 100 updates the provisional solution with any one of the generated solution candidates that brings the value of the objective function closer to the most appropriate direction (step S1208). The information processing device 100 ends the (3, 4)-flip neighborhood search process.

With reference to Fig. 13, an example of an update processing procedure executed by the information processing device 100 is described. The update process is implemented, for example, by the CPU 301, the storage area such as the memory 302 and the recording medium 305, and the network I/F 303, depicted in Fig. 3.

Fig. 13 is a flowchart depicting an example of the update processing procedure. In Fig. 13, the information processing device 100 obtains a neighbor list for the variable $x_k$ (step S1301). The information processing device 100 calculates the degree of relationship between the variable $x_k$ and each of the other variables, based on constraint conditions (step S1302).

Based on the calculated degree of relationship, the information processing device 100 determines other variables of a specified number to be correlated with the variable $x_k$ and updates the neighbor list for the variable $x_k$ (step S1303). The information processing device 100 ends the update process.

The information processing device 100 may execute processes of some steps in the flowcharts of Figs. 8 to 13 in a different order. For example, the order of the processes at steps S806 and S808 is interchangeable. The information processing device 100 may omit processes of some steps in the flowcharts of Figs. 8 to 13. For example, the process at step S808 is omissible.

As set forth hereinabove, the information processing device 100 may obtain constraint conditions that form a 0-1 integer programming problem including variables each taking a value 0 or 1 and that each include at least one of the variables. The information processing device 100 may identify pairings of: a variable that appears only in a predetermined number of constraint conditions that is less than the total number of constraint conditions among the constraint conditions,

and the predetermined number of constraint conditions in which the variables appear. The information processing device 100 may register, in the storage unit 400, first correlation information that correlates, for each identified pairing, a variable of the pairing with another variable that appears in at least one of the predetermined number of constraint conditions of the pairing. The information processing device 100 may register, in the storage unit 400, second correlation information that correlates, based on the degree of relationship between variables among plural variables, at least one of the variables with another variable having a certain or greater degree of relationship with the at least one of the variables. According to the information processing device 100, by referring to the storage unit 400, a group of any two or more correlated variables among the variables is determined as an object for inverting values based on the first correlation information and the second correlation information, thereby making it possible to search for a solution to the 0-1 integer programming problem. This enables the information processing device 100 to accurately and efficiently search for a solution to the 0-1 integer programming problem.

According to the information processing device 100, it is possible to set 1 to the predetermined number. This allows the information processing device 100 to accurately and efficiently search for a solution to the 0-1 integer programming problem even when a variable appearing in only one constraint condition exists.

According to the information processing device 100, it is possible to search for a solution to the 0-1 integer programming problem by repeatedly executing a series of processes until the ending condition is satisfied. According to the series of processes, it is possible to determine one or more groups each including any two or more correlated variables among the variables. According to the series of processes, it is possible to identify, for each of the determined one or more groups, a solution candidate for the 0-1 integer programming problem in which the value of the group is inverted, from the provisional solution to the 0-1 integer programming problem. According to the series of processes, when there is any solution candidate among the identified solution candidates that brings the value of the objective function closer to an appropriate direction than the provisional solution, the provisional solution may be updated with the any of the solution candidates. Thus, the information processing device 100 may approximate the provisional solution to an optimal solution by updating the provisional solution, thereby enabling calculation of an appropriate solution to the 0-1 integer programming problem.

According to the series of processes, the first process may be executed. According to the first process, for each of variables, a first solution candidate for the 0-1 integer programming problem in which the value of the variable is inverted may be identified from the provisional solution to the 0-1 integer programming problem. According to the first process, when among the identified first solution candidates, there is any first solution candidate that brings the value of the objective function closer to an appropriate direction than the provisional solution, the provisional solution may be updated with the any first solution candidate. Thus, the information processing device 100 may approximate the provisional solution to an optimal solution by updating the provisional solution, enabling an appropriate solution to the 0-1 integer programming problem to be calculated.

According to the series of processes, when there is no first solution candidate that brings the value of the objective function closer to an appropriate direction than the provisional solution, the second process may be performed. According to the second process, it is possible to determine one or more groups each including any two correlated variables among the variables. According to the second process, for each of the determined one or more groups, it is possible to identify a second solution candidate for the 0-1 integer programming problem in which the value of the group is inverted from the provisional solution. According to the second process, when among the identified second solution candidates, there is any second solution candidate that brings the value of the objective function closer to an appropriate direction than the provisional solution, the provisional solution may be updated with the any second solution candidate. Thus, the information processing device 100 may approximate the provisional solution to an optimal solution and calculate an appropriate solution for the 0-1 integer programming problem.

According to the series of processes, when there is no second solution candidate that brings the value of the objective function closer to an appropriate direction than the provisional solution, the third process may be performed. According to the third process, it is possible to determine one or more groups each including any three or four correlated variables among the variables. According to the third process, for each of the determined one or more groups, it is possible to identify a third solution candidate for the 0-1 integer programming problem in which the value of the group is inverted from the provisional solution. According to the third process, when among the identified third solution candidates, there is any third solution candidate that brings the value of the objective function closer to an appropriate direction than the provisional solution, the provisional solution may be updated with the any third solution candidate. Thus, the information processing device 100 may approximate the provisional solution to an optimal solution and calculate an appropriate solution for the 0-1 integer programming problem.

According to the information processing device 100, it is possible to obtain an objective function including a product of the violation amount of each of the constraint conditions multiplied by a parameter that is a coefficient, so as to aim at reducing the violation amount of each of the constraint conditions. According to the information processing device 100, the series of processes may again be performed after updating the parameter as a coefficient by which at least one of the constraint conditions is multiplied, to a value larger than the current value. As a result, the information processing device 100 may update the provisional solution so as not to violate the constraint conditions, making it possible to search for a solution to the 0-1 integer programming problem with high accuracy.

According to the information processing device 100, the series of processes may again be performed after updating the parameter as a coefficient by which at least one of the constraint conditions is multiplied, to a value smaller than the current value. This allows the information processing device 100 to efficiently search for a solution to a 0-1 integer programming problem via a provisional solution that violates the constraint conditions.

According to the information processing device 100, the ending condition may be that the elapsed time from the first execution of the series of processes has exceeded a predetermined length. As a result, the information processing device 100 may stop the repeated execution of the series of processes at an appropriate timing, and may suppress an increase in the amount of processing.

According to the information processing device 100, the ending condition may be that the series of processes has been executed a predetermined number of times. As a result, the information processing device 100 may stop the repeated execution of the series of processes at an appropriate timing, and may suppress an increase in the amount of processing.

According to the information processing device 100, the ending condition may be that an end instruction input has been received. As a result, the information processing device 100 may stop the repeated execution of the series of processes at an appropriate timing, and may suppress an increase in the amount of processing.

According to the information processing device 100, the ending condition may be that the number of successive times that the provisional solution is not updated has exceeded a predetermined threshold. As a result, the information processing device 100 may stop the repeated execution of the series of processes at an appropriate timing, and may suppress an increase in the amount of processing.

According to the information processing device 100, the ending condition may be that the value of the objective function for the provisional solution has reached a predetermined value. As a result, the information processing device 100 may stop the repeated execution of the series of processes at an appropriate timing, and may suppress an increase in the amount of processing.

The information processing method described in the embodiments may be implemented by executing a prepared program on a computer such as a personal computer and a workstation. The information processing program is stored on a non-transitory, computer-readable recording medium such as a hard disk, a flexible disk, a compact disc ROM (CD-ROM), a magneto-optical (MO) disk, and a digital versatile disk (DVD), read out from the computer-readable medium, and executed by the computer. The program may be distributed through a network such as the Internet.

According to one aspect, it becomes possible facilitate solving 0-1 integer programming problems.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. An information processing program that causes a computer to execute a process comprising:

   obtaining a plurality of constraint conditions that form a 0-1 integer programming problem including a plurality of variables each taking a value 0 or 1, the plurality of constraint conditions each including at least one of the plurality of variables;
   identifying pairings of a variable that appears only in a predetermined number of constraint conditions among the plurality of constraint conditions, and the predetermined number of constraint conditions in which the variable appears, the predetermined number being less than a total number of constraint conditions of the plurality of constraint conditions;
   registering, in a storage unit, for each of the identified pairings, first correlation information correlating the variable of the pairing with another variable that appears in at least one of the predetermined number of constraint conditions of the pairing;
   registering, in the storage unit, second correlation information correlating, based on a degree of relationship between variables of the plurality of variables, at least one of the plurality of variables with another variable that has a predetermined or greater degree of relationship with the at least one variable; and
   searching for a solution to the 0-1 integer programming problem by referring to the storage unit and determining, based on the first correlation information and the second correlation information, a group of any two or more correlated variables among the plurality of variables as an object for value inversion.

2. The information processing program according to claim 1, wherein
the predetermined number is 1.

3. The information processing program according to claim 2, wherein

the solution to the 0-1 integer programming problem is a combination of values of the variables of the plurality of variables, and
the searching includes searching for the solution to the 0-1 integer programming problem by repeatedly carrying out a series of processes until an ending condition is satisfied, the series of processes including:

determining one or more groups each including any two or more correlated variables among the variables of the plurality of variables;
identifying, for each of the determined one or more groups, a solution candidate for the 0-1 integer programming problem, obtained by inverting the value of the group from a provisional solution to the 0-1 integer programming problem; and
updating the provisional solution when, based on an objective function that forms the 0-1 integer programming problem, any solution candidate that, among the identified solution candidates, brings a value of the objective function closer to an appropriate direction than the provisional solution, the provisional solution being updating with the any solution candidate.

4. The information processing program according to claim 3, wherein
the series of processes includes a first process of:

identifying, for each of the plurality of variables, a first solution candidate for the 0-1 integer programming problem, obtained by inverting the value of the variable from the provisional solution to the 0-1 integer programming problem; and
updating the provisional solution when, based on the objective function, there is any first solution candidate that, among the identified first solution candidates, brings the value of the objective function closer to the appropriate direction than the provisional solution, updating the provisional solution with the any first solution candidate.

5. The information processing program according to claim 4, wherein
the series of processes includes a second process of:

determining one or more groups each including any two correlated variables among the plurality of variables, when there is no first solution candidate that brings the value of the objective function closer to the appropriate direction than the provisional solution;
identifying, for each of the determined one or more groups, a third solution candidate for the 0-1 integer programming problem, obtained by inverting the value of the group from the provisional solution; and
updating the provisional solution when, based on the objective function, there is any second solution candidate that, among the identified second solution candidates, brings the value of the objective function closer to the appropriate direction than the provisional solution, the provisional solution being updated with the any second solution candidate.

6. The information processing program according to claim 5, wherein
the series of processes includes a third process of:

determining one or more groups each including any three or four correlated variables among the plurality of variables, when there is no second solution candidate that brings the value of the objective function closer to the appropriate direction than the provisional solution,;
identifying, for each of the determined one or more groups, the third solution candidate for the 0-1 integer programming problem, obtained by inverting the value of the group from the provisional solution; and
updating the provisional solution when, based on the objective function, there is any third solution candidate that, among the identified third solution candidates, brings the value of the objective function closer to the appropriate direction than the provisional solution, the provisional solution being updated with the any third solution candidate.

7. The information processing program according to claim 5 or 6, wherein

the objective function includes a product of a violation amount of each of the plurality of constraint conditions multiplied by a parameter serving as a coefficient so as to aim at reducing the violation amount of each of the plurality of constraint conditions, and

when the provisional solution is updated after a most-recent update of the parameter as the coefficient but before a current execution of the series of processes and the provisional solution is not updated with the current execution of the series of processes, the searching includes: updating the parameter to a value greater than a current value, and then executing the series of processes again, the parameter being updated as the coefficient by which at least one of the plurality of constraint conditions is multiplied.

8. The information processing program according to claim 7, wherein

when the provisional solution is not updated during a period from after the most-recent update of the parameter as the coefficient until a start of the current execution of the series of processes and the provisional solution is not updated with the current execution of the series of processes, the searching includes: updating the parameter to a value smaller than a current value, and then executing the series of processes again, the parameter being updated as the coefficient by which at least one of the plurality of constraint conditions is multiplied.

9. The information processing program according to claim 3, wherein

the ending condition is that time elapsed from a first execution of the series of processes has exceeded a predetermined length.

10. The information processing program according to claim 3, wherein

the ending condition is that the series of processes has been executed a predetermined number of times.

11. The information processing program according to claim 3, wherein

the ending condition is that an input of an end instruction has been received.

12. The information processing program according to claim 3, wherein

the ending condition is that the number of successive times the provisional solution is not updated has exceeded a predetermined threshold.

13. The information processing program according to claim 3, wherein

the value of the objective function for the provisional solution has reached a predetermined value.

14. An information processing method executed by a computer, the information processing method comprising:

obtaining a plurality of constraint conditions that form a 0-1 integer programming problem including a plurality of variables each taking a value 0 or 1, the plurality of constraint conditions each including at least one of the plurality of variables;

identifying pairings of a variable that appears only in a predetermined number of constraint conditions among the plurality of constraint conditions, and the predetermined number of constraint conditions in which the variable appears, the predetermined number being less than a total number of constraint conditions of the plurality of constraint conditions;

registering, in a storage unit, for each of the identified pairings, first correlation information correlating the variable of the pairing with another variable that appears in at least one of the predetermined number of constraint conditions of the pairing;

registering, in the storage unit, second correlation information correlating, based on a degree of relationship between variables of the plurality of variables, at least one of the plurality of variables with another variable that has a predetermined or greater degree of relationship with the at least one variable; and

searching for a solution to the 0-1 integer programming problem by referring to the storage unit and determining, based on the first correlation information and the second correlation information, a group of any two or more correlated variables among the plurality of variables as an object for value inversion.

15. An information processing device, comprising:

a memory; and
a processor coupled to the memory, the processor configured to:

obtain a plurality of constraint conditions that form a 0-1 integer programming problem including a plurality of variables each taking a value 0 or 1, the plurality of constraint conditions each including at least one of the plurality of variables;

identify pairings of a variable that appears only in a predetermined number of constraint conditions among the plurality of constraint conditions, and the predetermined number of constraint conditions in which the variable appears, the predetermined number being less than a total number of constraint conditions of the plurality of constraint conditions;

register, in a storage unit, for each of the identified pairings, first correlation information correlating the variable of the pairing with another variable that appears in at least one of the predetermined number of constraint conditions of the pairing;

register, in the storage unit, second correlation information correlating, based on a degree of relationship between variables of the plurality of variables, at least one of the plurality of variables with another variable that has a predetermined or greater degree of relationship with the at least one variable; and

search for a solution to the 0-1 integer programming problem by referring to the storage unit and determining, based on the first correlation information and the second correlation information, a group of any two or more correlated variables among the plurality of variables as an object for value inversion.

# FIG.1

# FIG.2

200

100

210

201   201   ...   201

# FIG.3

100

301

**CPU**

302

**MEMORY**

300

303

**NETWORK I/F**

304

**RECORDING MEDIUM I/F**

305

**RECORDING MEDIUM**

210

**NETWORK**

# FIG.4

# FIG.5

500

INPUT: 0-1 INTEGER
PROGRAMMING PROBLEM

IDENTIFY PAIRINGS OF A VARIABLE
APPEARING IN ONLY ONE
CONSTRAINT CONDITION AND THE
ONE CONSTRAINT CONDITION

510

520

$$\min_{x,y} \sum_{i=1}^{n} y_i$$

$$s.t. \sum_{j=1}^{n} w_j x_{ij} - C y_i \le 0 (i = 1, \ldots, n)$$

$$\sum_{i=1}^{n} x_{ij} = 1 (j = 1, \ldots, n)$$

$$x_{ij} \in \{0,1\} (i = 1, \ldots, n; j = 1 \ldots, n)$$

$$y_i \in \{0,1\} (i = 1, \ldots, n)$$

$$w_j (j$$

$$= 1, \ldots, n), C), \text{WHERE, C IS POSITIVE NUMBER}$$

$$\left( y_i, \sum_{j=1}^{n} w_j x_{ij} - C y_i \le 0 \right), i = 1, \ldots, n$$

GENERATE

530

INITIAL LIST {yi}, WHICH IS NEIGHBOR LIST
FOR VARIABLES xij $x_{ij} (i = 1, \ldots, n; j = 1 \ldots, n)$

# FIG.6

EXAMPLE: UPDATE
NEIGHBOR LIST FOR $x_3$

600

INPUT: 0-1 INTEGER
PROGRAMMING PROBLEM

1. OBTAIN INITIAL LIST OF NEIGHBOR LIST
   FOR $x_3$
2. ADD TO INITIAL LIST, VARIABLES IN
   DESCENDING ORDER OF DEGREE OF
   RELATIONSHIP

EXTRACT

INITIAL LIST OF
NEIGHBOR LIST

NEIGHBOR LIST

610(611)

620(621)

620
(622)

$x_1 : \{y_2\}$

$x_3: \{y_1, y_2\} \cup$

(SET OF VARIABLES HAVING LARGE
DEGREE OF RELATIONSHIP)

$$(y_1, a_{12}x_2 + a_{13}x_3 + a_{15}x_5 - b_1 y_1 \le 0)$$

$x_2 : \{y_1\}$

REFER

$x_3 : \{y_1, y_2\}$

630

620(623)

$$(y_2, a_{21}x_1 + a_{23}x_3 + a_{26}x_6 - b_2 y_2 \le 0)$$

$x_5 : \{y_1\}$

620(624)

610(612)

CONVERT

$x_6 : \{y_2\}$

620(625)

# FIG.7

**OVERVIEW**

**PACKAGE _i_ FROM
A→B DESTINATION**

ROUTE CANDIDATE $x_{i1}$
USES TRANSPORT
VEHICLES $y_1$ AND $y_2$ FOR
MOVING FROM A TO B

ROUTE CANDIDATE $x_{i2}$
USES TRANSPORT
VEHICLES $y_3$, $y_4$
AND $y_5$ FOR MOVING FROM
A TO B

# FIG.8

START

S801
OBTAIN 0-1 LINEAR PROGRAMMING PROBLEM

S802
EXECUTE INITIALIZATION PROCESS

S803
ENDING CONDITION SATISFIED? — YES

NO
S804
EXECUTE 1-FLIP NEIGHBORHOOD SEARCH PROCESS

S805
HAS PROVISIONAL SOLUTION BEEN UPDATED? — YES

NO
S806
EXECUTE 2-FLIP NEIGHBORHOOD SEARCH PROCESS

S807
HAS PROVISIONAL SOLUTION BEEN UPDATED? — YES

NO
S808
EXECUTE (3, 4)-FLIP NEIGHBORHOOD SEARCH PROCESS

S809
HAS PROVISIONAL SOLUTION BEEN UPDATED? — YES

NO
S810
UPDATE PENALTY COEFFICIENT

S811
OUTPUT SOLUTION OF 0-1 INTEGER PROGRAMMING PROBLEM

END

# FIG.9

START

S901

EXTRACT PAIRINGS OF: A VARIABLE THAT
APPEARS ONLY IN ONE CONSTRAINT CONDITION,
AND THE ONE CONSTRAINT CONDITION

S902

GENERATE , FOR EACH EXTRACTED PAIRING,
INITIAL LIST TO BE SET IN NEIGHBOR LIST FOR
EACH OF VARIABLES THAT APPEAR IN
CONSTRAINT CONDITION OF PAIRING

END

# FIG.10

START

SELECT k-th VARIABLE $x_k$ — S1001

GENERATE SOLUTION CANDIDATE BY INVERTING VALUE OF SELECTED VARIABLE $X_k$ — S1002

IS VALUE OF OBJECTIVE FUNCTION CLOSER TO APPROPRIATE DIRECTION? — S1003

NO →

YES ↓

UPDATE PROVISIONAL SOLUTION WITH SOLUTION CANDIDATE — S1006

END

k>N? — S1004

YES ←

NO ↓

INCREMENT k — S1005

# FIG.11

START

S1101
SELECT k-th VARIABLE $x_k$

S1102
UPDATE NEIGHBOR LIST FOR VARIABLE $x_k$

S1103
IDENTIFY, FOR EACH OF OTHER VARIABLES CORRELATED WITH VARIABLE $x_k$, GROUP INCLUDING VARIABLE $x_k$ AND THE OTHER VARIABLES

S1104
GENERATE, FOR EACH GROUP, SOLUTION CANDIDATE BY INVERTING VALUE OF EACH VARIABLE OF GROUP FROM PROVISIONAL SOLUTION TO 0-1 INTEGER PROGRAMMING PROBLEM

S1105
ANY SOLUTION CANDIDATE PRESENT THAT BRINGS VALUE OF OBJECTIVE FUNCTION CLOSER TO APPROPRIATE DIRECTION? — NO

YES

S1108
UPDATE PROVISIONAL SOLUTION WITH SOLUTION CANDIDATE THAT BRINGS VALUE OF OBJECTIVE FUNCTION CLOSER TO MOST APPROPRIATE DIRECTION

END

S1106
k>N? — YES

NO

S1107
INCREMENT k

# FIG.12

```
            START

                      ┌ S1201
   SELECT k-th VARIABLE xₖ

                      ┌ S1202
   UPDATE NEIGHBOR LIST FOR
        VARIABLE xₖ

                      ┌ S1203
   IDENTIFY FOR EACH
   COMBINATION THAT CAN BE
   FORMED WITH TWO OR THREE
   OTHER VARIABLES CORRELATED
   WITH VARIABLE xₖ, GROUP
   INCLUDING VARIABLE xₖ AND
        COMBINATION

                      ┌ S1204
   GENERATE, FOR EACH GROUP,
   SOLUTION CANDIDATE BY
   INVERTING VALUE OF EACH
   VARIABLE OF GROUP, FROM
   PROVISIONAL SOLUTION TO 0-1
   INTEGER PROGRAMMING
        PROBLEM

                      ┌ S1205
         ANY
      SOLUTION
      CANDIDATE
   PRESENT THAT BRINGS              NO
VALUE OF OBJECTIVE FUNCTION ──────────
      CLOSER TO
     APPROPRIATE
      DIRECTION?

         YES
                      ┌ S1208
   UPDATE PROVISIONAL SOLUTION
   WITH SOLUTION CANDIDATE
   THAT BRINGS VALUE OF                        ┌ S1206
   OBJECTIVE FUNCTION CLOSER TO      YES
   MOST APPROPRIATE DIRECTION ──────────  k>N?

          END                                  NO
                                                   ┌ S1207
                                         INCREMENT k
```

# FIG.13

START

S1301
OBTAIN NEIGHBOR LIST FOR VARIABLE $x_k$

S1302
CALCULATE DEGREE OF RELATIONSHIP BETWEEN VARIABLE $x_k$ AND EACH OF OTHER VARIABLES

S1303
DETERMINE OTHER VARIABLES OF SPECIFIED NUMBER TO BE CORRELATED WITH VARIABLE $x_k$ AND UPDATE NEIGHBOR LIST FOR VARIABLE $x_k$

END

Europäisches
Patentamt

European
Patent Office

Office européen
des brevets

# EUROPEAN SEARCH REPORT

Application Number

EP 24 19 8399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SHUNJI UMETANI: "Exploiting variable associations to configure efficient local search algorithms in large-scale binary integer programs", ARXIV.ORG, CORNELL UNIVERSITY LIBRARY, 201 OLIN LIBRARY CORNELL UNIVERSITY ITHACA, NY 14853, 28 April 2016 (2016-04-28), XP081399397, * abstract; page 1 - page 19; figures 1, 2 * | 1-15 | INV. G06N5/01 |
| | - - - - - | | |
| A | ELIAS B KHALIL ET AL: "MIP-GNN: A Data-Driven Framework for Guiding Combinatorial Solvers", ARXIV.ORG, CORNELL UNIVERSITY LIBRARY, 201 OLIN LIBRARY CORNELL UNIVERSITY ITHACA, NY 14853, 27 May 2022 (2022-05-27), XP091233962, * abstract; page 1 - page 7; figure 1 * | 1-15 | |
| | - - - - - | | TECHNICAL FIELDS SEARCHED (IPC) |
| | | | G06N |

The present search report has been drawn up for all claims

| Place of search | Date of completion of the search | Examiner |
|---|---|---|
| The Hague | 30 January 2025 | Klasen, TJ |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **UMETANI, SHUNJI**. Exploiting variable associations to configure efficient local search algorithms in large-scale binary integer programs. *European Journal of Operational Research*, 2017, vol. 263 (1), 72-81

- **UMETANI SHUNJI**. Exploiting variable associations to configure efficient local search algorithms in large-scale binary integer programs. *European Journal of Operational Research*, 2017, vol. 263 (1), 72-81